# EUROPÄISCHE PATENTSCHRIFT

(11) **EP 3 729 127 B1**
(45) Veröffentlichungstag und Bekanntmachung des Hinweises auf die Patenterteilung: **15.01.2025**
(21) Anmeldenummer: 18826248.9
(22) Anmeldetag: 14.12.2018
(51) Int. Cl.: G01S 7/481, B32B 27/36, C08J 7/04, C08K 5/00, C09D 183/04, G02B 1/04, G02B 5/22, G02B 1/14, C08G 77/04, C08J 7/043, C08J 7/046, C08J 7/05, C08J 7/054, G02B 5/20

(54) **VORRICHTUNG AUS EINEM MEHRSCHICHTKÖRPER UND EINEM LIDAR-SENSOR**
DEVICE MADE UP OF A MULTILAYER BODY AND A LIDAR SENSOR
DISPOSITIF PRÉSENTANT UN CORPS MULTICOUCHE ET PRÉSENTANT UN CAPTEUR LIDAR

(30) Priorität: 21.12.2017 EP 17209207
(43) Veröffentlichungstag der Anmeldung: 28.10.2020
(73) Patentinhaber: Covestro Deutschland AG, 51373 Leverkusen (DE)
(72) Erfinder: GROSSER, Ulrich, 51515 Kürten (DE); MEYER, Alexander, 40489 Düsseldorf (DE); KLEIN, Andreas, 51371 Leverkusen (DE); HINZMANN, Dirk, 50259 Pulheim (DE); CAPELLEN, Peter, 47803 Krefeld (DE); OSER, Rafael, 47800 Krefeld (DE); HAGEN, Rainer, 51377 Leverkusen (DE)
(74) Vertreter: Levpat
(86) Internationale Anmeldenummer: PCT/EP2018/084855
(87) Internationale Veröffentlichungsnummer: WO 2019/121347

(56) Entgegenhaltungen:
- WO-A1-2014/095981
- DE-A1- 102006 045 549
- US-A- 5 041 313
- US-A1- 2012 287 417
- US-A1- 2017 322 075

## Beschreibung

Die Erfindung betrifft ein Sensor-System, umfassend einen LiDAR-Sensor, der Laserlicht mit einer Wellenlänge im Bereich von 800 nm bis 1600 nm emittiert, und eine den LiDAR-Sensor ganz oder teilweise umgebende Abdeckung umfassend einen Mehrschichtkörper. Der Mehrschichtkörper, welcher vor dem LiDAR-Sensor angeordnet ist, umfasst eine Substratschicht aus einer thermoplastischen Zusammensetzung und mindestens eine Decklackschicht. Die Erfindung betrifft außerdem Fahrzeuge, umfassend derartige Sensor-Systeme als auch die Verwendung bestimmter Decklacke als Beschichtungsschicht für mehrschichtige LiDAR-Sensor-Abdeckungen.

Fahrerassistenzsysteme wie Notbremsassistenten, Spurverlassenswarner, Verkehrszeichenerkennungssysteme, adaptive Geschwindigkeitssteuerungssysteme und Abstandshalter sind bekannt und werden in heutigen Fahrzeugen eingesetzt. Für die Umsetzung der genannten Funktionen werden Umgebungserfassungssensoren, die sich i.d.R. auf Radar-, LiDAR-, Ultraschall- und Kamerasensoren stützen, eingesetzt. LiDAR-Sensoren sind insbesondere für hoch automatisiertes und autonomes Fahren wichtig, denn sie sind in der Lage, hochaufgelöste dreidimensionale Bilder der Fahrzeugumgebung vom Nah- bis Fernbereich zu liefern. Die in der vorliegenden Erfindung beschriebenen Substratmaterialien sind insbesondere für LiDAR-Sensoren geeignet.

LiDAR (Abkürzung für engl. Light detection and ranging) oder auch LaDAR (Laser detection and ranging) ist eine dem Radar verwandte Methode zur optischen Abstands- und Geschwindigkeitsmessung. Statt der Radio- bzw. Mikrowellen beim Radar werden infrarote Laserstrahlen verwendet. Es gibt sehr unterschiedliche Typen von LiDAR-Systemen, die sich u.a. durch den horizontalen Erfassungsbereich (z.B. 70° bis zu 360°), den Lasertyp (z.B. scannender Dauerstrichlaser oder statischer Pulslaser) und die Sensortechnologie (z.B. mechanisch rotierender Spiegel oder Halbleiterelektronik) unterscheiden. Beispielsweise beschreibt US 2012/287417 A1 ein LED-LiDAR-Sensor-System, umfassend eine Abdeckung mit einer Substratschicht auf Basis von Makrolon^{®} Polycarbonat Material 2405 der Farbformulierung 450601, das annähernd 0 % Transmission bei Wellenlängen unter 700 nm aufweisen soll. Das Dokument beschäftigt sich nicht mit Laserlicht-Sensoren.

Durch die vorliegende Erfindung werden auch dem LiDAR technisch verwandte Infrarotkameras abgedeckt, welche eine eigene Infrarotlichtquelle verwenden.

Auf thermoplastischem Material basierende Bauteile bieten für den Einsatz im Fahrzeugbereich viele Vorteile gegenüber herkömmlichen Materialien wie z.B. Glas. Hierzu zählen z.B. erhöhte Bruchsicherheit und/oder Gewichtsersparnis, die im Fall von Automobilen eine höhere Insassensicherheit bei Verkehrsunfällen und einen niedrigeren Kraftstoffverbrauch ermöglichen. Schließlich lassen Werkstoffe, die thermoplastische Polymere enthalten, aufgrund der einfacheren Formbarkeit eine wesentlich größere Designfreiheit zu.

Da thermoplastische Materialien i.d.R. durchlässig für Infrarot(IR)-Strahlung sind, sollten diese prinzipiell für derartige Sensorsysteme geeignet sein. Überraschenderweise, wie im Rahmen der Erfindung erkannt wurde, eignen sich jedoch die meisten herkömmlichen Thermoplasten, welche im Automobilaußenbereich eingesetzt werden, nicht für derartige Sensoren. So ließ sich zeigen, dass schon geringe Wandstärken von weniger als 1 mm bei vielen Thermoplasten genügen, die Signalstärke eines LiDAR-Sensors derart deutlich herabzusetzen, dass sie für solche Systeme ungeeignet sind. Hierzu zählen z.B. Polyolefine, Polyamide, ABS, PC/ABS-Blends und weitere im Automobilaußenbereich gängig eingesetzte thermoplastische Materialien,

WO 2014/095981 A1 beschreibt dunkle Mehrschichtkörper aus Polycarbonat. Ein Einsatz als Abdeckungen von Sensoren ist nicht beschrieben, erst recht nicht ein Einsatz als Abdeckungen für LiDAR-Sensoren.

Neben dem Substratmaterial selbst können auch weitere Faktoren zur Dämpfung des LiDAR-Sensor-Signals beitragen. Hierzu zählen z.B. weitere Bauteile aus anderen Materialien sowie Schutz- bzw. Lackschichten. Eine Abdeckung aus einem thermoplastischen Material soll dazu dienen, den LiDAR-Sensor zu verbergen und auch einen Schutz für die empfindliche Sensorelektronik darstellen. Die Abdeckung selbst muss aber vor Verwitterung und Umwelteinflüssen sowie Verschleiß der Außenfläche geschützt werden. Hier wäre beispielsweise an entsprechende Lackschichten zu denken. Solche Schutzschichten sind grundsätzlich bekannt und werden z.B. bei Scheinwerferabdeckungen eingesetzt. Es hat sich aber gezeigt, dass nicht beliebige für thermoplastische Systeme geeignete Lack- und Schutzschichten zur Beschichtung einer Abdeckung für ein Sensor-System, umfassend einen LiDAR-Sensor geeignet sind.

Die Funktionsfähigkeit des Sensorsystems muss sichergestellt sein; Witterungs- und Gebrauchseinflüsse dürfen die Funktionsfähigkeit des Sensors nicht beeinträchtigen. So kann es aber durch Abrieb, Kratzer oder gar Erosion in der Lackschicht zu einer Dämpfung des Signals des LiDAR-Sensors kommen. Im Stand der Technik findet sich über die Beeinflussung von LiDAR-Sensoren in Folge üblichen Gebrauchsverschleißes oder verwitterter Lackschichten, welche auf thermoplastischen Materialien angeordnet sind, keine Lehre zum Handeln.

Im Stand der Technik sind verschiedene thermoplastische Systeme beschrieben, die prinzipiell eine Durchlässigkeit für elektromagnetische Wellen aufweisen.

In CN 105400189 A wird ein Laserstrahlen-durchlässiges opakes Substratmaterial auf Basis eines Polyurethan-Polyester-Systems beschrieben. Es werden spezielle Farbmittelkombinationen aufgeführt, die für diese Polyurethan-Polyester-basierten Systeme geeignet sind und für Laserstrahlen prinzipiell durchlässig sind. Derartige Zusammensetzungen sind insbesondere für das Laserschweißen geeignet. Substratmaterialien auf Basis von Polycarbonat sind nicht beschrieben. Sensorgeeignete Substratmaterialien sind ebenfalls nicht beschrieben.

In der WO 2016/037865 A1 sind Automobilaußenteile in glasartiger Optik beschrieben. Substratmaterialien, die für LiDAR-Systeme geeignet sind, werden hier nicht beschrieben.

In der WO 2008/12775 A1 werden Radarsensoren für Automobilanwendungen beschrieben. Diese Sensoren arbeiten jedoch im Bereich von 20 - 25 GHz und lassen keinen Rückschluss auf geeignete Substratmaterialien für Laser-gestützte Systeme im IR-Bereich zu.

In der WO 2008/149093 A1 werden laminierte und pigmentierte Glassysteme beschrieben, die unter anderem für LiDAR-Sensoren geeignet sind. Aus diesem Dokument ist keine Lösung für Polycarbonat-basierte Substratmaterialien abzuleiten.

In der US 2009/284603 A1 werden thermoplastische Substrate, welche Farbmittel enthalten, beschrieben. Diese Substratmaterialien sollen eine gute Durchlässigkeit für IR-Strahlung aufweisen. Es werden bestimmte Farbmittelmischungen beschrieben. Ob diese Mischungen für Laser-gestützte Detektoren geeignet sind, wird nicht beschrieben. Es werden keine speziellen Farbmittelzusammensetzungen für Polycarbonat beschrieben.

Die EP 1772667 A2 beschreibt Kunststoffbauteile mit verdeckt angeordneten Lichtelementen. Das Kunststoffbauteil verdeckt dabei das Lichtelement, ist aber für die entsprechende Strahlung transparent oder semitransparent. Um dies zu erreichen, enthält das Substrat Effektpigmente. Derartige Pigmente sind für Laser-gestützte Systeme ungeeignet, da sie zu Streuung führen.

In der JP 2003-004942 A werden Mehrschichtkörper beschrieben, welche aus verschiedenen Lagen von Materialien bestehen, die einen unterschiedlichen Brechungsindex aufweisen. Diese Systeme sind für IR-Strahlung durchlässig. Allerdings werden an Materialien für Abdeckungen für Laser-gestützte IR-Sensoren deutlich höhere Anforderungen gestellt. Es werden keine Laser-gestützten Sensoren beschrieben.

Die US 2016/0291134 A1 berichtet über den Einsatz von LiDAR-Sensoren im Automobilbereich zum autonomen bzw. teilautonomen Fahren. Auf geeignete Substratmaterialien zur Abdeckung oder Einhausung von LiDAR-Sensoren wird nicht eingegangen.

Die Kratzfestigkeit von Polycarbonat ist auch noch verbesserbar; üblicherweise werden daher zur Beschichtung von Formteilen noch Kratzfestbeschichtungen eingesetzt.

Aus diesen Gründen werden thermoplastische Substrate wie beispielsweise Polycarbonatformkörper mit einem Schutzüberzug versehen. Dabei sind für den Außeneinsatz gerade solche Schutzsysteme besonders geeignet, die sowohl einen mechanischen Schutz gegen Abrieb und Verkratzung als auch einen exzellenten Schutz gegen Bewitterungseinflüsse, d.h. Beregnung, Temperatur und insbesondere ultraviolette Strahlung (UV) bilden.

Die hierfür geeigneten Beschichtungssysteme, die beispielsweise für Scheinwerferabdeckscheiben aus Polycarbonat verwendet werden, lassen sich grob in zwei Kategorien einteilen:
(a) Thermisch härtende Beschichtungssysteme auf Basis eines Polysiloxanlackes, die sowohl einschichtig als auch mehrschichtig (mit einer lediglich haftvermittelnden Primerschicht zwischen Substrat und Polysiloxandecklack) sein können. Diese sind u. a. in US 4,278,804 A, US 4,373,061 A, US 4,410,594 A, US 5,041,313 A und EP-A-1 087 001 beschrieben.
(b) Ebenso können UV-härtende Beschichtungssysteme z.B. auf Acrylat-, Urethanacrylat- oder Acrylsilanbasis, die gegebenenfalls Füllstoffe zur Verbesserung der Kratzfestigkeit beinhalten, aufgrund ihres größeren Applikationsschichtdickenfensters einen ausreichenden Witterungsschutz bilden. Solche Systeme sind bekannt und u.a. beschrieben in US 3,707,397 A oder DE 69 71 7959 T2, US 5,990,188 A, US 5,817,715 A, US 5,712,325 A, und WO 2014/100300 A1.

Im Stand der Technik sind für IR-Strahlung durchlässige Systeme, die auf thermoplastischen Substraten basieren, beschrieben. Derartige Substrate sind z.B. für Infrarotkameras oder zum Laserschweißen geeignet. Allerdings ergibt sich daraus keine Lehre zum Handeln, da Laser-gestützte Sensor-Systeme, die im IR-Bereich arbeiten, eine deutlich erhöhte Empfindlichkeit aufweisen. So führen geringste Streuungen zu Fehlern in der Sensorik und machen damit entsprechende Substratmaterialien unbrauchbar.

Mehrschichtkörper mit einer Substratschicht aus thermoplastischem Material, insbesondere solche auf der Basis von aromatischem Polycarbonat, welche für Kfz-, Schienenfahrzeug- und Luftfahrzeug-Außenteile etc. einsetzbar sind und zur Umgebungsüberwachung für Fahrzeuge durch LiDAR-Sensoren geeignet sind, sind somit nicht beschrieben.

Außenteile umfassend einen, bevorzugt bestehend aus einem Mehrschichtkörper, umfassend eine Substratschicht aus thermoplastischem Material, die im Kraftfahrzeug-, Schienenfahrzeug- und Luftfahrzeug- bzw. im Infrastrukturbereich eingesetzt werden, sollten zudem möglichst eine lange Lebensdauer aufweisen und während dieser nicht verspröden, d.h. sie sollten möglichst witterungsstabil sein. Auch Farbe und Oberfläche (Glanzeffekt) sollten sich nach Möglichkeit nur geringfügig verändern. Ferner sollten die thermoplastischen Teile möglichst über eine ausreichende Kratzfestigkeit verfügen. Eine mangelnde Kratzfestigkeit bzw. Witterungsstabilität kann nicht nur die Lebensdauer des Bauteils selbst, sondern auch die Funktion des Sensorsystems negativ beeinflussen.

Aufgabe der hier vorliegenden Erfindung war es somit, entsprechende Vorrichtungen, d.h. Systeme, bereitzustellen, die eine Kombination zur Umgebungsüberwachung, umfassend eine Abdeckung aus einem geeigneten Mehrschichtkörper, umfassend eine Substratschicht aus einem thermoplastischen Material und eine Decklackschicht, und einem LiDAR-Sensor, der im IR-Bereich von 800 nm bis 1600 nm arbeitet, aufweisen. Dabei sollte möglichst noch mindestens eine der weiteren vorgenannten Anforderungen erfüllt bzw. entsprechende Nachteile überwunden werden.

Aufgabe der hier vorliegenden Erfindung war es, eine Vorrichtung für ein Transportmittel wie Schienenfahrzeug, Fluggerät - etwa Flugzeug, Helikopter oder Drohne - oder Kraftfahrzeug mit einer Kombination aus einem LiDAR-Sensor, welcher in einem Wellenlängenbereich von 800 bis 1600 nm arbeitet, und einer geeigneten, d.h. einer eine höchstens geringe Signal-Dämpfung bewirkenden, witterungs- und abrasionsbeständigen Abdeckung aus einem Mehrschichtkörper mit einer Substratschicht aus einer thermoplastischen Zusammensetzung, bereitzustellen.

Überraschend wurde gefunden, dass die Aufgabe durch ein
Sensor-System, umfassend
a) einen LiDAR-Sensor, der Laserlicht mit einer Wellenlänge im Bereich von 800 bis 1600 nm aussendet, und
b) eine den LiDAR-Sensor teilweise oder ganz umgebende Abdeckung, umfassend einen Mehrschichtkörper, umfassend in dieser Reihenfolge
   (i) eine Substratschicht, umfassend eine thermoplastische Zusammensetzung auf Basis von aromatischem Polycarbonat mit einer Schmelzvolumenrate MVR von 8 bis 20 cm³/(10 min), bevorzugt 9 bis 19 cm³/(10 min), bestimmt nach ISO 1133-1:2012-03 (300°C, 1,2 kg),
      wobei die Zusammensetzung eine Lichttransmission im Bereich von 380 bis 780 nm von weniger als 25,0 %, bevorzugt bis zu 20 %, weiter bevorzugt weniger als 15 %, bestimmt bei einer Schichtdicke von 4 mm nach DIN ISO 13468-2:2006 (D65, 10°), aufweist
      und wobei die Substratschicht in ihrer jeweiligen Dicke eine Transmission für IR-Strahlung im Bereich von 800 nm bis 1600 nm von mindestens 40 %, bevorzugt 45 %, besonders bevorzugt 55 % und insbesondere bevorzugt größer 65 %, bestimmt nach DIN ISO 13468-2:2006 (in Anlehnung an diese Norm, Wellenlängenbereich wurde wie genannt verwendet), aufweist, und
   ii) ggf. eine Primerschicht auf Basis von Polymethylmethacrylat (PMMA) und enthaltend mindestens einen UV-Absorber,
   iii) eine Decklackschicht auf Polysiloxanbasis, enthaltend eine Kombination eines organo-modifizierten Silans mit einem Kieselsol, wobei die Decklackschicht Siliciumdioxid-Partikel mit einem D₉₀, bestimmt mittels Rastertransmissionselektronenmikroskopie, von weniger als 0,50 µm und keine weiteren Partikel mit einem D₉₀, bestimmt mittels Rastertransmissionselektronenmikroskopie, ≥ 0,50 µm enthält,
      wobei die Decklackschicht auf der Seite der Substratschicht ist, die der Seite der Substratschicht, auf welcher der LiDAR-Sensor angeordnet ist, gegenüberliegt, und wobei die Decklackschicht bevorzugt einen UV-Absorber enthält
bzw. durch ein Fahrzeug, insbesondere ein Kraftfahrzeug, umfassend ein solches System, gelöst wird.

Gerade Abdeckungen aus dunklem, eingefärbten Polycarbonat sind interessant, da der LiDAR-Sensor hinter ihnen verborgen werden kann, Bauteile im Spritzgussverfahren hergestellt werden können und Polycarbonat auch sehr gute Eigenschaften wie eine hohe Wärmeformbeständigkeit, hohe Steifigkeit und weitere gute Eigenschaften aufweist.

Dabei wird "System" nicht nur im engen Sinne eines Paketes aus mechanisch verbundenen Einzelteilen, etwa wie eine Vorrichtung, verstanden, sondern auch breiter als bloße Kombination (lediglich) funktionell zu einer Einheit verbundener Einzelteile. Der LiDAR-Sensor kann separat in das jeweilige Fahrzeug eingebracht werden und die Abdeckung für eine gewünschte Stelle im Fahrzeug, durch welche die Pulse des LiDAR-Sensors gehen sollen, vorgesehen sein. Ebenso kann es sich aber um eine mechanisch verbundene Kombination handeln.

"Auf Basis von" in Bezug auf die Substratschicht bedeutet hierbei, dass die Zusammensetzung der Substratschicht das aromatische Polycarbonat als Hauptkomponente enthält, bevorzugt in einem Anteil von mindestens 70 Gew.-%, bevorzugt mindestens 80 Gew.-%, weiter bevorzugt mindestens 85 Gew.-%, noch weiter bevorzugt mindestens 90 Gew.-%, besonders bevorzugt mindestens 95 Gew.-% des jeweiligen Polymers, jeweils bezogen auf die Gesamtzusammensetzung der Substratschicht. Für die Primerschicht in Bezug auf das Polymethylmethacrylat, das ebenfalls die Basis der Primerschicht bildet, gilt, dass der Anteil des Polymethylmethacrylats bevorzugt mindestens 50 Gew.-%, weiter bevorzugt mindestens 60 Gew.-%, besonders bevorzugt mindestens 65 Gew.-% Polymethylmethacrylat enthält.

Der D₉₀-Wert bezeichnet die Partikelgröße, bei der 90% der Partikel kleiner sind. Entsprechend ist der Dso-Wert die mittlere Partikelgröße. 50 % der Partikel haben eine kleinere Partikelgröße als der angegebene Wert. Im Rahmen der vorliegenden Erfindung gilt die folgende Bestimmungsmethode für die jeweils angegebenen Partikelgrößen: Bestimmung mittels TEM/STEM (Rastertransmissionselektronenmikroskop) in Anlehnung an DIN SPEC 52407:2015-03, wobei die Probenpräparation als Dünnschnitt an einer Lackschicht erfolgte. Über die Messung wurde ein Grauwertbild erhalten, da die Partikel eine höhere Dichte als die Matrix haben. Über Grauwertauswertung mittels bildanalytischer Verfahren werden die Teilchen von der Matrix separiert; die Größe kann nun bestimmt werden. Durch Bildauswertung wird der Durchmesser der Teilchen ermittelt (bevorzugt durch Auswertung der Partikelfläche; der Durchmesser wird ermittelt durch den flächengleichen Kreis (ECD-Methode; equivalent circle diameter). Die statistische Auswertung z.B. d₉₀; Median, arithm. Mittelwert erfolgt an einer Stichprobe. Im Rahmen der vorliegenden Erfindung ist immer der arithmetische Mittelwert des Durchmessers (D(n)) angegeben.

"Transmission im Bereich von 800 nm bis 1600 nm" bedeutet eine gemittelte Transmission (arithmetisches Mittel) über diesen Bereich, gemittelt über alle Wellenlängen in diesem Bereich.

"Abdeckung" bzw. "Verwendung zur Abdeckung" bedeutet erfindungsgemäß, dass die Abdeckung aus bzw. mit dem Teilbereich aus der beschriebenen thermoplastischen Zusammensetzung verwendet wird, um vor den LiDAR-Sensor gesetzt zu werden, um diesen gegen Stoß, Verschmutzung, etc. zu schützen bzw. "nach außen hin" abzudecken. Auch aerodynamische und/oder Designgründe können Zweck der Abdeckung sein. Eine Abdeckung im erfindungsgemäßen Sinn kann dabei ein den LiDAR-Sensor vollständig oder annähernd vollständig - von Kabelführungen etc. abgesehenumhüllendes Gehäuse sein. Eine solche Kombination aus Gehäuse und LiDAR-Sensor ist neben dem übergeordneten System des Fahrzeugs gleichfalls ein erfindungsgemäßer Gegenstand. Alle Ausführungsformen und als bevorzugt beschriebenen Gestaltungen gelten selbstverständlich auch für diese Kombination alleine. Ebenso kann die Abdeckung aber auch nur ein Element sein, das dem LiDAR-Sensor zur Fahrzeugaußenhaut hin, bevorzugt als Fahrzeugaußenhaut, vorgesetzt ist. Eine solche Abdeckung ist beispielsweise ein Frontpanel oder ein Stoßfänger, bevorzugt ein Frontpanel. Unter einem Frontpanel wird erfindungsgemäß ein Fahrzeugkarosserieteil verstanden, welches als Teil der Außenhülle am Fahrzeug angebracht wird. Dabei kann es sich um einen formgebenden Bestandteil der Fahrzeugfront handeln oder um ein Designelement, welches an der Front des Fahrzeuges angebracht wird. Unter einem "Frontpanel" wird ferner z.B. ein Ersatzteil für einen Kühlergrill verstanden. Durch neue Mobilitätsformen, wie z.B. die Elektromobilität, ist ein Kühlergrill, bestehend aus einer Vielzahl von Öffnungen, nicht mehr nötig. Deshalb ist ein Frontpanel bevorzugt eine in sich geschlossene Frontabdeckung oder ein Karosserieteil, welches ggf. nur vereinzelt Lüftungsschlitze aufweist oder eine Kühlergrilloptik nur noch aus Designgründen beinhaltet und verschiedene Funktionen in sich vereint. Ein derartiges Bauteil kann nahtlos integriert werden. Dabei ist die Abdeckung das Element, das von dem Laserlicht (Pulse oder Continuous Wave) des LiDAR-Sensors zur Erfassung der Umgebung durchstrahlt wird. Erfindungsgemäße Abdeckungen sind auch Seitenpanels, z.B. Türelemente, oder Heckpanels, die eine Abdeckung von ggf. erforderlichen seitlichen Sensoren oder am Heck angebrachten Sensoren ermöglichen.

Die Abdeckung "besteht" bevorzugt aus dem Mehrschichtkörper. "Mehrschichtkörper" im Sinne der vorliegenden Erfindung sind Körper, welche mindestens die Substratschicht und eine Decklackschicht aufweisen. Dabei kann die Decklackschicht, welcher die Funktion einer Kratzfestschicht und/oder Wittterungsschutzschicht zukommt, selber ein Ein- oder Mehrschichtsystem sein.

Zwischen der Decklackschicht und der Substratschicht kann außerdem noch eine Primer-Schicht liegen. Besonders bevorzugte Abdeckungen bestehen aus der Substratschicht und auf einer oder beiden Seiten der Substratschicht liegenden Decklackschicht, die gleich oder verschieden sein kann, ggf. jeweils mit einer Primerschicht zwischen Substratschicht und Decklackschicht.

Die Abdeckung kann nicht nur an KFZ, sondern ebenso an anderen Transport- und Fortbewegungsmitteln, wie Drohnen, Flugzeugen, Helikoptern oder Schienenfahrzeugen, angebracht sein, die erfindungsgemäß alle unter dem Begriff "Fahrzeuge" subsumiert werden.

"Substratschicht, umfassend eine thermoplastische Zusammensetzung" ist so zu verstehen, dass der wesentliche Teil der Substratschicht, nämlich der, der vor dem LiDAR-Sensor angeordnet ist, d.h. den LiDAR-Sensor zur Fahrzeugumgebung hin abdeckt, aus einer solchen thermoplastischen Zusammensetzung besteht, d.h. die Substratschicht umfasst einen Bereich, welcher aus einer solchen thermoplastischen Zusammensetzung besteht, wobei dieser Bereich vor dem LiDAR-Sensor angeordnet ist. Die Substratschicht kann jedoch auch andere Teilbereiche aus einer anderen thermoplastischen Zusammensetzung, welche nicht die erfindungsgemäßen Merkmale aufweist, aufweisen. Bei einem Frontpanel beispielsweise können dieses Bereiche für Scheinwerferabdeckungen sein, die eine hohe Lichttransmission aufweisen. Derartige Abdeckungen sind insbesondere im Zwei- oder Mehrkomponenten-Spritzgussverfahren herstellbar. Ebenso kann die Abdeckung Teilbereiche aus unterschiedlichen Zusammensetzungen aufweisen, welche die erfindungsgemäßen Merkmale aufweisen. Erfindungsgemäß bevorzugt besteht die Substratschicht jedoch aus der thermoplastischen Zusammensetzung.

Decklackschichten können einseitig oder beidseitig auf der Substratschicht ausgeführt sein. Bevorzugt ist mindestens eine Decklackschicht auf der Seite der Abdeckung aufgebracht, die dazu bestimmt ist, auf der Außenseite des Fahrzeugs, insbesondere des KFZ, zu liegen, d.h. auf der Seite, die zur Umwelt hin orientiert ist. Sofern beidseitig Decklackschichten aufgebracht sind, können auch unterschiedliche Beschichtungen verwendet werden. Für die nach Außen gerichtete Seite sind insbesondere Schichten bevorzugt, welche die Medien-, Witterungs- und/oder Abriebbeständigkeit verbessern. Auf der nach innen gerichteten Seite des Mehrschichtkörpers können Beschichtungen insbesondere zur Verbesserung der Antidust-, Antifog- und/oder Antireflexeigenschaften eingesetzt werden.

"Bis zu" bedeutet einschließlich des genannten Wertes. Bei "bis zu 20 %" sind somit auch "20 %" umfasst und ebenso im Rundungsbereich liegende Werte, z.B. "20,3 %".

Dass die "Substratschicht in ihrer jeweiligen Dicke eine bestimmte Transmission für IR-Strahlung aufweist", bedeutet hierbei, dass die IR-Durchlässigkeit an dem jeweiligen Formteil im Bereich des LiDAR-Strahlengangs zu bestimmen ist. Die tatsächliche Durchlässigkeit des Bauteils für die IR-Strahlung im Bereich von 800 bis 1600 nm wird hier betrachtet. Analoges gilt für die angegebene Lichttransmission im VIS-Bereich.

"Mehrschichtig" im erfindungsgemäßen Sinne bedeutet "mindestens zwei Schichten", nämlich eine Substratschicht und eine Decklackschicht, die auf der dem LiDAR-Sensor abgewandten Seite der Substratschicht liegt, wobei zusätzlich zur Decklackschicht noch eine Primerschicht vorliegen kann, die zwischen Decklackschicht und Substrat liegt. Es können insbesondere jedoch noch weitere Schutz- oder Funktionsschichten auf der nach innen gerichteten Seite des Mehrschichtkörpers vorliegen, insbesondere eine zweite Decklackschicht und ggf. Primerschicht, sowie Funktionsschichten z.B. Antireflex-, Antifog-, Antidust-Schichten, solange diese das Signal des LiDAR-Sensors nicht signifikant dämpfen.

Unter "Fahrzeug" werden erfindungsgemäß alle Transportmittel, von Gütern und/oder Personen, verstanden, d.h. sowohl Land-, Wasser- als auch Luftfahrzeuge.

Die Dicke der Substratschicht ist die Dicke an dem dicksten Punkt der Substratschicht im Bereich des LiDAR-Strahlendurchgangs.

Die beschriebenen Mehrschichtkörper sind ausreichend durchlässig für das Laserlicht des LiDAR-Sensors.

Dabei ist der Mehrschichtkörper, aufweisend mindestens eine Decklackschicht, bevorzugt so beschaffen, dass die Decklackschicht und optional vorhandene weitere Schichten, wie z.B. Primerschichten, die Transmission der Abdeckung für die Strahlung des LiDAR-Sensors nicht signifikant verringern. "Nicht signifikant" bedeutet eine Reduzierung der Intensität der durch die Abdeckung gegangenen Laser-IR-Strahlung im Bereich von 800 bis 1600 nm, insbesondere von 880 nm bis 950 nm und/ oder von 1520 bis 1570 nm, um bis zu 15 %, bevorzugt bis zu 10 %, besonders bevorzugt bis zu 5 %, gegenüber derselben Abdeckung ohne Decklackschicht. Sofern neben der mindestens einen Decklackschicht zusätzlich zu der Substratschicht noch weitere Schichten vorhanden sind, führen auch diese insgesamt, bevorzugt zusammen mit der Decklackschicht, bevorzugt maximal zu einer Reduzierung der Intensität der durch die Abdeckung gegangenen Laser-IR-Strahlung im Bereich von 800 bis 1600 nm, insbesondere von 880 nm bis 950 nm und/oder 1520 bis 1570 nm, bestimmt nach DIN ISO 13468-2:2006, um bis zu 15 %, bevorzugt bis zu 10%, besonders bevorzugt bis zu 5 %, gegenüber derselben Abdeckung aus lediglich einer Substratschicht, d.h. einer Abdeckung, umfassend neben der Substratschicht keine weiteren Schichten.

Auch zwischen dem LiDAR-Sensor und der Abdeckung liegt bevorzugt nichts, was das Signal des LiDAR-Sensors signifikant dämpft. Nicht "signifikant" bedeutet hierbei eine maximale zusätzliche Dämpfung von bis zu 5 %.

Hinsichtlich weiter bevorzugter Ausführungsformen gelten die an anderen Stellen beschriebenen Merkmale.

Gegenstand der Erfindung ist außerdem die Verwendung eines Mehrschichtkörpers, umfassend
i) eine Substratschicht, bevorzugt mit einer Dicke von 1,0 bis 7,0 mm, weiter bevorzugt 1,0 bis 6,0 mm, umfassend eine, bevorzugt bestehend aus einer thermoplastischen Zusammensetzung auf Basis von aromatischem Polycarbonat mit einer Schmelzvolumenrate MVR von 8 bis 20 cm³/(10 min), bevorzugt 9 bis 19 cm³/(10 min), bestimmt nach ISO 1133-1:2012-03 (300°C, 1,2 kg),
   wobei die Zusammensetzung eine Lichttransmission im Bereich von 380 bis 780 nm von weniger als 25,0 %, bevorzugt bis zu 20 %, weiter bevorzugt weniger als 15 %, bestimmt bei einer Schichtdicke von 4 mm nach DIN ISO 13468-2: 2006 (D65, 10°), aufweist und
   wobei die Substratschicht in ihrer jeweiligen Dicke eine Transmission für IR-Strahlung im Bereich von 800 bis 1600 nm, insbesondere von 880 nm bis 950 nm und/oder von 1520 bis 1570 nm, von mindestens 40 %, bevorzugt mindestens 65 %, aufweist,
   und
ii) ggf. eine Primerschicht auf Basis von Polymethylmethacrylat und enthaltend mindestens einen UV-Absorber und
iii) mindestens eine Decklackschicht auf Polysiloxanbasis,
   enthaltend eine Kombination eines organo-modifizierten Silans mit einem Kiesel-Sol,
   wobei die Decklackschicht Siliciumdioxid-Partikel mit einem D₉₀, bestimmt mittels Rastertransmissionselektronenmikroskopie, von weniger als 0,50 µm und keine weiteren Partikel mit einem D₉₀, bestimmt mittels Rastertransmissionselektronenmikroskopie, >_ 0,50 µm enthält,
   zur teilweisen oder vollständigen Abdeckung eines LiDAR-Sensors, der Laserlicht mit einer Wellenlänge im Bereich von 800 bis 1600 nm, insbesondere von 880 nm bis 950 nm und/oder von 1520 bis 1570 nm, aussendet,
   wobei die Decklackschicht auf der Seite der Substratschicht ist, die der Seite der Substratschicht, auf welcher der LiDAR-Sensor angeordnet wird, gegenüberliegt.

Es versteht sich, dass die als bevorzugt für das Sensor-System beschriebenen Merkmalsvarianten ebenso für die genannte Verwendung bzw. das Fahrzeug gelten.

Bevorzugt weisen die Abdeckungen, insbesondere die Substratschicht, einen schwarzen Farbeindruck auf. Grundsätzlich sind auch farbige Abdeckungen realisierbar, d.h. etwa rote, grüne oder blaue.

Die Abdeckungen aus bzw. umfassend Bereiche aus den beschriebenen thermoplastischen Zusammensetzungen zeigen in diesen Bereichen außerdem folgende positive Eigenschaften:
- eine glasartige Optik;
- ein geringes Gewicht im Vergleich zu Stahl oder Glas, was wichtig ist, um das Gewicht des Fahrzeugs möglichst gering halten zu können;
- sie werden den Anforderungen hinsichtlich der Sicherheit der Fahrzeuginsassen ebenso wie der anderer Verkehrsteilnehmer, insbesondere Fußgänger, gerecht, und zeigen dabei insbesondere eine ausreichende Elastizität und Verformbarkeit, aber auch geringe Neigung zum Splittern;
- sie ermöglichen die Integration elektrotechnischer, elektronischer, elektrooptischer und optischer Funktionselemente, ohne deren Funktion, sowohl in Bezug auf das Fahrzeug und dessen Insassen als auch in Bezug auf die Außenwelt, nennenswert einzuschränken;
- sie ermöglichen das Abdecken elektrotechnischer, elektronischer, elektrooptischer und optischer Funktionselementen, ohne deren Funktion, sowohl in Bezug auf das Fahrzeug und dessen Insassen als auch in Bezug auf die Außenwelt, nennenswert einzuschränken;
- sie können ein ansprechendes Design aufweisen, insbesondere durchgängig und fugenlos ausgebildet sein, und dabei möglichst in zwei, bevorzugt allen drei Raumrichtungen verformt sein;
- sie können einfach, insbesondere mit möglichst wenigen Fertigungsschritten, hergestellt werden, wobei insbesondere alle Fertigungsschritte nebst Integration zumindest eines Teils der Funktionselemente in einem Werkzeug realisierbar sind und ein nachträgliches Anbringen und Abdichten der Funktionselemente entfällt;
- sie können - in Bereichen, die vor dem LiDAR-Sensor liegen, mit den beschriebenen thermoplastischen Zusammensetzungen und in Bereichen, die nicht vor dem LiDAR-Sensor liegen, auch mit anderen thermoplastischen Zusammensetzungen hinterspritzt werden;
- sie können zumindest zur Außenseite des Fahrzeugs hin eine ansprechende und gegen Umwelteinflüsse, beispielsweise Witterung, aber auch Steinschlag, widerstandsfähige Oberfläche aufweisen.

Eine entsprechende Abdeckung ist darüber sehr einfach herstellbar, wobei alle Fertigungsschritte nebst Integration der Funktionselemente in einem Werkzeug realisierbar sind und ein nachträgliches Anbringen und Abdichten der Funktionselemente entfällt.

Neben dem LiDAR-Sensor kann die Abdeckung weiterer Funktionselemente und Geräte erfolgen, z.B. von Abstandssensoren, beispielsweise als Einparkhilfe, Bewegungssensoren, mit deren Hilfe beispielsweise die Motorhaube geöffnet werden kann, Lichtleisten, Scheinwerfern, Blinkern, Kameras und Bildschirmen. Wie zuvor beschrieben, kann die Abdeckung, auch die Substratschicht, dafür auch transparente Bereiche aufweisen. Ferner ist diese Lösung grundsätzlich auch für Radargestützte Sensoren geeignet.

Die Abdeckung ist bevorzugt ein Formteil, das im Front- oder Heckbereich eines Fahrzeugs eingesetzt wird, z.B. ein Stoßfänger, Kühlergrill, Frontpanel oder ein Heckpanel, insbesondere ein Frontpanel für ein Kfz-Fahrzeug, kann aber ebenso ein Fahrzeugseitenteil sein. Die Abdeckung kann aber auch ebenso ein Dach oder Dachmodul für ein Kfz-Fahrzeug sein. Besonders bevorzugt liegen zwischen der Abdeckung und dem LiDAR-Sensor keine weiteren Elemente auf dem Weg des Strahlenganges, welche die Arbeit des LiDAR-Sensors beeinträchtigen.

Der erfindungsgemäß eingesetzte LiDAR-Sensor sendet Laserlicht im Bereich von 800 bis 1600 nm, bevorzugt im Bereich von 820 bis 1600 nm, besonders bevorzugt im Bereich 880 nm bis 950 nm und/oder 1520 bis 1570 nm, aus. Ganz besonders bevorzugte LiDAR-Sensoren arbeiten bei einer Nenn-Wellenlänge (gemessen in Luft) von ca. 905 nm, oder bei einer Nenn-Wellenlänge von ca. 1550 nm (gemessen in Luft).

Der Abstand des LiDAR-Sensors zur Abdeckung beträgt bevorzugt ≤ 300 mm, weiter bevorzugt ≤ 200 mm, noch weiter bevorzugt ≤ 100 mm, besonders bevorzugt ≤ 50 mm. Der gewählte Abstand ist im Wesentlichen konstruktionsbedingt zu sehen, da er so gewählt werden sollte, dass der Sensor ausreichend vor Impaktereignissen geschützt ist. Grundsätzlich kann der LiDAR-Sensor auch direkt an die Abdeckung gesetzt werden und ggf. mit dieser verbunden, z.B. verklebt oder verschraubt, werden.

Die Positionierung des LiDAR-Sensors wird vorzugsweise so gewählt, dass der Sensor mittig im Front- oder im Heckbereich des Fahrzeugs angeordnet ist. Der LiDAR-Sensor kann aber z.B. auch in Eckbereichen des Fahrzeuges angeordnet werden oder versetzt.

Die Substratschicht der erfindungsgemäß beschriebenen Abdeckungen im Bereich der beschriebenen thermoplastischen Zusammensetzungen, bevorzugt im gesamten Bereich der Substratschicht, weist bevorzugt eine Dicke von 1,0 bis 7,0 mm, bevorzugt 1,6 bis 6,0 mm, besonders bevorzugt eine Dicke von 2,0 bis 4,0 mm auf. Da die erfindungsgemäß vorhandene Decklackschicht von der Dicke her im µm-Bereich liegt, ebenso die ggf. vorhandene Primerschicht, weicht die Gesamtdicke der Abdeckung nicht wesentlich von diesen Werten ab, so dass diese Werte ebenso gut für die Gesamtdicke der Abdeckung verstanden werden können.

Erfindungsgemäß gewählte aromatische Polycarbonate haben bevorzugt gewichtsmittlere Molekulargewichte M_{w} von 22.000 bis 29.000 g/mol, wobei aber grundsätzlich auch gewichtsmittlere Molekulargewichte M_{w} von 10.000 bis 50.000 g/mol, weiter bevorzugt von 14.000 bis 40.000 g/mol, besonders bevorzugt von 16.000 bis 32.000 g/mol geeignet wären. Hierbei werden die Werte M_{w} durch Gelpermeationschromotographie ermittelt, kalibriert gegen Bisphenol A-Polycarbonat Standards unter Verwendung von Dichlormethan als Elutionsmittel, Kalibrierung mit linearen Polycarbonaten (aus Bisphenol A und Phosgen) bekannter Molmassenverteilung der PSS Polymer Standards Service GmbH, Deutschland, Kalibrierung nach der Methode 2301-0257502-09D (aus dem Jahre 2009 in deutscher Sprache) der Currenta GmbH & Co. OHG, Leverkusen. Das Elutionsmittel ist Dichlormethan. Säulenkombination aus vernetzten Styrol-Divinylbenzolharzen. Durchmesser der analytischen Säulen: 7,5 mm; Länge: 300 mm. Partikelgrößen des Säulenmaterials: 3 µm bis 20 µm. Konzentration der Lösungen: 0,2 Gew.-%. Flussrate: 1,0 ml/min, Temperatur der Lösungen: 30°C. Detektion mit Hilfe eines Brechungsindex(RI)-Detektors.

Die Herstellung der Polycarbonate erfolgt vorzugsweise nach dem Phasengrenzflächenverfahren oder dem Schmelze-Umesterungsverfahren, welche vielfach in der Literatur beschrieben werden.

Zum Phasengrenzflächenverfahren sei beispielhaft auf H. Schnell, "Chemistry and Physics of Polycarbonates", Polymer Reviews, Vol. 9, Interscience Publishers, New York 1964 S. 33 ff., auf Polymer Reviews, Vol. 10, "Condensation Polymers by Interfacial and Solution Methods", Paul W. Morgan, Interscience Publishers, New York 1965, Kap. VIII, S. 325, auf Dres. U. Grigo, K. Kircher und P. R- Müller "Polycarbonate" in Becker/Braun, Kunststoff-Handbuch, Band 3/1, Polycarbonate, Polyacetale, Polyester, Celluloseester, Carl Hanser Verlag München, Wien 1992, S. 118-145 sowie auf EP 0 517 044 A1 verwiesen.

Das Schmelze-Umesterungsverfahren ist beispielsweise in der "Encyclopedia of Polymer Science", Vol. 10 (1969), Chemistry and Physics of Polycarbonates, Polymer Reviews, H. Schnell, Vol. 9, John Wiley and Sons, Inc. (1964) sowie in den Patentschriften DE 10 31 512 A und US 6,228,973 B1 beschrieben.

Die Polycarbonate werden bevorzugt durch Reaktionen von Bisphenolverbindungen mit Kohlensäureverbindungen, insbesondere Phosgen, oder beim Schmelzeumesterungsprozess von Diphenylcarbonat bzw. Dimethylcarbonat dargestellt.

Hierbei sind Homopolycarbonate auf Basis von Bisphenol-A und Copolycarbonate auf der Basis der Monomere Bisphenol-A und 1,1-Bis-(4-hydroxyphenyl)-3,3,5-trimethylcyclohexan, z.B. Apec^{®} der Covestro Deutschland AG, besonders bevorzugt.

Diese und weitere Bisphenol- bzw. Diolverbindungen, die sich für die Polycarbonatsynthese einsetzen lassen, sind unter anderem beschrieben in WO 2008/037364 A1 (s.7, Z. 21 bis s. 10, Z. 5) , EP 1 582 549 A1 ([0018] bis [0034]), WO 2002/026862 A1 (S. 2, Z. 20 bis S. 5, Z. 14) und WO 2005/113639 A1 (S. 2, Z.1 bis S. 7, Z. 20).

Die Polycarbonate können linear oder verzweigt sein. Es können auch Mischungen aus verzweigten und unverzweigten Polycarbonaten eingesetzt werden.

Geeignete Verzweiger für die Herstellung von verzweigten Polycarbonaten sind aus der Literatur bekannt und beispielsweise beschrieben in den Patentschriften US 4,185,009 B und DE 25 00 092 A1 (3,3-Bis-(4-hydroxyaryl-oxindole, s. jeweils gesamtes Dokument), DE 42 40 313 A1 (s. S. 3, Z. 33 bis 55), DE 19 943 642 A1 (s. S. 5, Z. 25 bis 34) und US 5,367,044 B sowie in hierin zitierter Literatur.

Darüber hinaus können die verwendeten Polycarbonate auch intrinsisch verzweigt sein, wobei hier kein Verzweiger im Rahmen der Polycarbonatherstellung zugegeben wird. Ein Beispiel für intrinsische Verzweigungen sind sogenannte Fries-Strukturen, wie sie für Schmelzepolycarbonate in der EP 1 506 249 A1 beschrieben sind.

Zudem können bei der Polycarbonat-Herstellung Kettenabbrecher eingesetzt werden. Als Kettenabbrecher werden bevorzugt Phenole wie Phenol, Alkylphenole wie Kresol und 4-tert.-Butylphenol, Chlorphenol, Bromphenol, Cumylphenol oder deren Mischungen verwendet.

Grundsätzlich kann die beschriebene Zusammensetzung der Substratschicht neben dem aromatischen Polycarbonat, auch Mischungen, weitere, d.h. andere als aromatisches Polycarbonat thermoplastische Polymere enthalten. Solche thermoplastischen Polymere sind Polystyrol, StyrolCopolymere, cyclisches Polyolefin, Poly- oder Copolyacrylate und Poly- oder Copolymethacrylat wie z.B. Poly- oder Copolymethylmethacrylate (wie PMMA) sowie Copolymere mit Styrol wie z.B. transparentes Polystyrolacrylnitril (PSAN), thermoplastische Polyurethane, Polymere auf Basis von zyklischen Olefinen (z.B. TOPAS^{®}, ein Handelsprodukt der Firma Ticona), Polycarbonat-Blends mit olefinischen Copolymeren oder Pfropfpolymeren, wie beispielsweise Styrol/Acrylnitril-Copolymeren.

Dabei darf nur so viel weiteres thermoplastisches Polymer enthalten sein, dass die Transmission für das Laserlicht des LiDAR-Sensors nicht so stark gestört wird, dass die Funktionsfähigkeit des Systems nicht mehr gegeben ist. Bevorzugt enthält die Substratschicht daher weniger als 5,0 Gew.-%, weiter bevorzugt weniger als 1,0 Gew.-% weiteres thermoplastisches Polymer, ganz besonders bevorzugt gar kein weiteres thermoplastisches Polymer. "Weniger als" bedeutet erfindungsgemäß, dass die jeweilige Komponente auch gar nicht enthalten sein kann.

Bevorzugt ist erfindungsgemäß ein
Sensor-System, umfassend
a) einen LiDAR-Sensor, der Laserlicht mit einer Wellenlänge im Bereich von 800 bis 1600 nm aussendet, und
b) eine den LiDAR-Sensor teilweise oder ganz umgebende Abdeckung, umfassend einen Mehrschichtkörper, umfassend
   in dieser Reihenfolge
   eine Substratschicht, umfassend eine thermoplastische Zusammensetzung,
      wobei die Zusammensetzung eine Lichttransmission im Bereich von 380 bis 780 nm von weniger als 25,0 %, bevorzugt bis zu 20 %, weiter bevorzugt weniger als 15 %, bestimmt bei einer Schichtdicke von 4 mm nach DIN ISO 13468-2: 2006 (D65, 10°), aufweist
      und wobei die Substratschicht in ihrer jeweiligen Dicke eine Transmission für IR-Strahlung im Bereich von 880 nm bis 950 nm und/oder 1520 bis 1570 nm von mindestens 65 %, bestimmt nach DIN ISO 13468-2: 2006, aufweist,
      und wobei die thermoplastische Zusammensetzung

   i) mindestens 70 Gew.-% aromatisches Polycarbonat mit einer Schmelzvolumenrate MVR von 8 bis 20 cm³/(10 min), bestimmt nach ISO 1133-1:2012-03 (300°C, 1,2 kg),
   ii) mindestens ein grünes und/oder ein blaues Farbmittel und
   iii) mindestens ein rotes und/oder violettes Farbmittel,
   iv) optional weitere Farbmittel,

   und 0 bis weniger als 5,0 Gew.-% weitere thermoplastische Polymere
   und 0 bis weniger als 0,005 % Ruß
   enthält,
   wobei die Summe der Farbmittel ii) bis iv) in der thermoplastischen Zusammensetzung > 0,005 Gew.-%, bevorzugt > 0,05 Gew.-% beträgt
   und wobei die Dicke der Substratschicht 1,0 bis 7,0 mm, bevorzugt 1,5 bis 6,0 mm, weiter bevorzugt 2 bis 5 mm, besonders bevorzugt 2,0 bis 5,0 mm, beträgt, und
   mindestens eine Decklackschicht auf Polysiloxanbasis, enthaltend eine Kombination eines organo-modifizierten Silans mit einem Kiesel-Sol, wobei die Decklackschicht Siliciumdioxid-Partikel mit einem D₉₀, bestimmt mittels Rastertransmissionselektronenmikroskopie, von weniger als 0,50 µm, bevorzugt weniger als 0,20 µm, weiter bevorzugt weniger als 100 nm, besonders bevorzugt weniger als 50 nm, ganz besonders bevorzugt weniger als 30 nm, äußerst bevorzugt 15 bis 30 nm, und keine weiteren Partikel mit einem D₉₀, bestimmt mittels Rastertransmissionselektronenmikroskopie, ≥ 0,50 µm, enthält.

Die Zusammensetzung enthält ein grünes und/oder ein blaues Farbmittel (Komponente ii) sowie ein rotes und/oder violettes Farbmittel (Komponente iii). Optional können weitere Farbmittel (Komponente iv) verwendet werden - darunter insbesondere bevorzugt gelbe Farbmittel.

Bevorzugt wird daher mindestens ein Farbmittel, ausgewählt aus den Farbmitteln der Formeln (1), (2a-c), (3), (4), (5), (6), (7), (8) (Gruppe ii), insbesondere bevorzugt (1), (2a-c), (3) oder (4), mit mindestens einem Farbmittel, ausgewählt aus den Farbmitteln der Formeln (9), (10), (11), (12), (13) (14a), (14b), (15) (Gruppe iii), bevorzugt ausgewählt aus den Formeln (10), (14a), (14b) oder (15), verwendet. Optionale weitere Farbmittel (Gruppe iv) sind bevorzugt ausgewählt aus den Farbmitteln der Formeln (16) bis (20), insbesondere bevorzugt ausgewählt aus den Farbmittel der Formeln (16) und (17). Die Farbmittel, welche sich hinter diesen Formeln verbergen, sind nachfolgend näher beschrieben.

Grüne Farbmittel sind insbesondere bevorzugt Farbmittel der Formeln (1) und (2a/2b/2c):

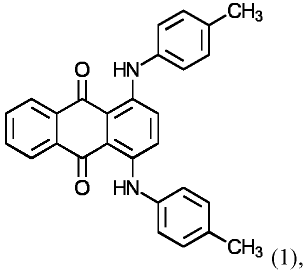

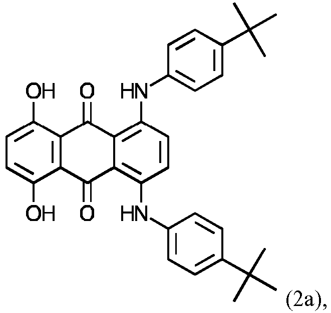

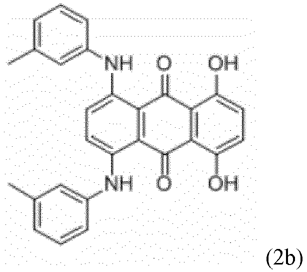

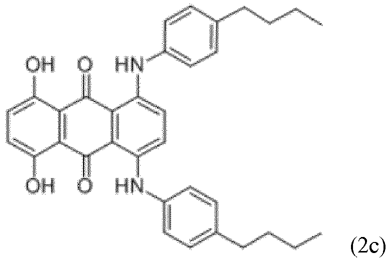

Das Farbmittel der Formel (1) ist unter dem Namen Macrolex Grün 5B der Firma Lanxess Deutschland GmbH bekannt, Color Index-Nummer 61565, CAS-Nummer: 128-90-3, und ist ein Anthrachinonfarbstoff.

Farbmittel der Formeln (2a), (2b) und (2c) sind unter anderem unter dem Namen Macrolex Grün G (Solvent Green 28) bekannt.

Blaue Farbmittel, die eingesetzt werden, sind bevorzugt Farbmittel der Formeln (3) und/oder (4a/4b) und/oder (5a/5b): 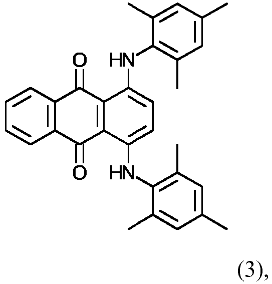 erhältlich unter dem Namen "Keyplast Blue KR", CAS-Nummer 116-75-6, 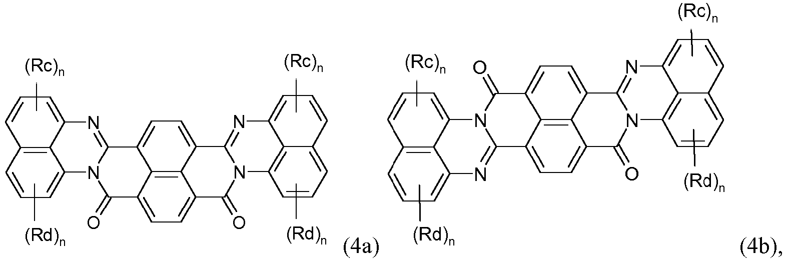 wobei
- Rc und Rd unabhängig voneinander für einen linearen oder verzweigten Alkylrest oder Halogen stehen, bevorzugt für Methyl, Ethyl, Propyl, Isopropyl, Butyl, Isobutyl, tert.-Butyl, Pentyl, Neopentyl, Hexyl, Thexyl, oder Cl, weiter bevorzugt für Methyl, Cl und besonders bevorzugt für Cl stehen,
- n unabhängig vom jeweiligen R für eine natürliche Zahl zwischen 0 und 3 steht, wobei der Rest für n=0 Wasserstoff ist.

In einer bevorzugten Ausführungsform sind Rc und/oder Rd Cl und stehen in o und/oder p-Positionen zu den Kohlenstoffatomen, welche die Aminfunktionalitäten tragen, wie z.B. diorthochlornapthalino-, di-ortho, mono-para-chlornaphthalino, sowie mono-ortho-naphthalino. Ferner stellen in einer bevorzugten Ausführungsform Rc und Rd jeweils einen tert-Butylrest dar, welcher sich bevorzugt in meta-Position zu den Kohlenstoffatomen, welche die Stickstofffunktionalitäten tragen, befindet.

In einer besonders bevorzugten Ausführungsform ist in allen Ringen n=0, so dass alle Rc und Rd = H sind.

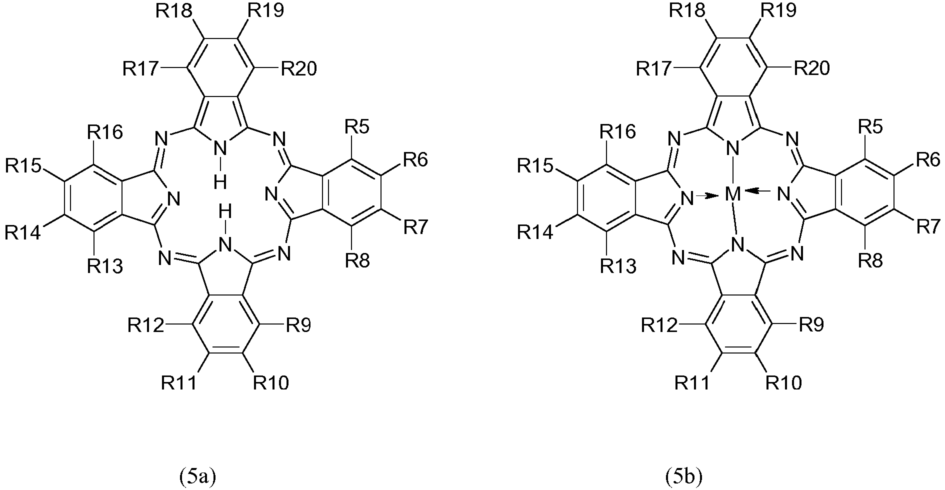

Die Reste R(5-20) sind jeweils unabhängig voneinander Wasserstoff, Methyl, Ethyl, Propyl, Isopropyl, Butyl, Isobutyl, tert.-Butyl, Pentyl, Neopentyl, Hexyl, Thexyl, Fluor, Chlor, Brom, Sulfon, CN.

Bevorzugt ist R(5-20) in allen Positionen gleich. Weiter bevorzugt ist R(5-20) in allen Positionen H. In einer alternativen Ausführungsform ist R(5-20) in allen Positionen Cl.

M ist bevorzugt Aluminium (mit R=H: Aluminiumphthalocyanin, CAS: 14154-42-8). Nickel (mit R=H: Nickelphthalocyanin, CAS: 14055-02-8), Cobalt (mit R=H: Kobaltphthalocyanin, CAS: 3317-67-7), Eisen (mit R=H: Eisenphthalocyanin, CAS: 132-16-1), Zink (mit R=H: Zinkphthalocyanin, CAS: 14320-04-08), Kupfer (mit R=H: Kupferphthalocyanin, CAS: 147-14-8; mit R=H und Cl: Polychlorkupferphthalocyanin, CAS: 1328-53-6; mit R=Cl: Hexadecachlorphthalocyanin, CAS: 28888-81-5; mit R=Br: Hexadecabromphthalocyanin, CAS: 28746-04-5), Mangan (mit R=H: Manganphthalocyanin, CAS: 14325-24-7).

Insbesondere bevorzugt ist die Kombination von M = Cu und R = H für alle Positionen. So ist eine Verbindung der Struktur (5b) mit M=Cu und R(5-20)=H als Heliogen^{®} Blau K 6911D oder Heliogen^{®} Blau K 7104 LW von der BASF AG, Ludwigshafen erhältlich.

Verbindungen der Struktur (5a) sind z.B. als Heliogen^{®} Blau L 7460 von der BASF AG, Ludwigshafen, erhältlich.

Ferner können als blaue Farbmittel eingesetzt werden:
Farbmittel der Formel (6), erhältlich unter dem Namen "Macrolex Blue 3R Gran" 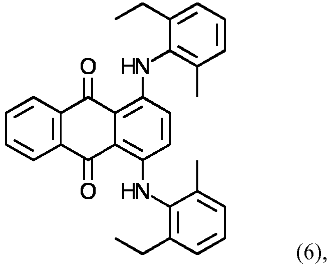 und/oder Farbmittel der Formel (7), erhältlich unter dem Namen "Macrolex Blue RR" (CAS 32724-62-2; Solvent Blue 97; C.I. 615290),

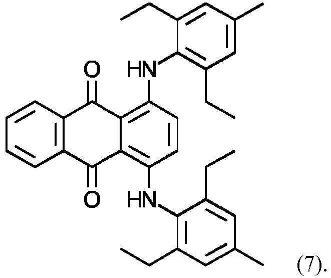

Ferner kann als blaues Farbmittel eingesetzt werden: 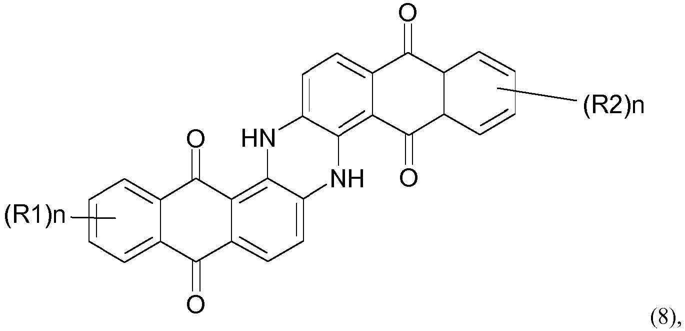 wobei
- R1 und R2 unabhängig voneinander für einen linearen oder verzweigten Alkylrest, oder Halogen stehen, bevorzugt für Methyl, Ethyl, Propyl, Isopropyl, Butyl, Isobutyl, tert.-Butyl, Pentyl, Neopentyl, Hexyl, Thexyl, oder Cl, weiter bevorzugt für Methyl, Cl und besonders bevorzugt für Cl stehen,
- n für eine natürliche Zahl zwischen 0 und 4 steht.

In einer besonders bevorzugten Ausführungsform ist in allen Ringen n=0, so dass alle R1 und R2 = H sind.

Farbmittel dieser Struktur (8) sind kommerziell erhältlich unter der Paliogen Blau Reihe der BASF AG.

Bei Verwendung von Farbmitteln der Struktur (8) sind insbesondere die Pigmente bevorzugt, die ein Schüttvolumen (bestimmt nach DIN ISO 787-11:1995-10) von 2 l/kg - 10 l/kg, bevorzugt 3 l/kg - 8 l/kg, eine spezifische Oberfläche (bestimmt nach DIN 66132:1975-07) von 5 m²/g - 60 m²/g, bevorzugt 10 m²/g - 55 m²/g, und einen pH-Wert (bestimmt nach DIN ISO 787-9) von 4 - 9 aufweisen.

Als rotes Farbmittel wird bevorzugt ein Farbmittel der Formel (9), erhältlich unter dem Namen "Macrolex Red 5B", mit der CAS-Nummer 81-39-0, eingesetzt:

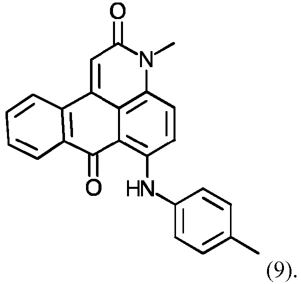

Weiterhin können Farbmittel der Formeln (10) mit der CAS-Nummer 71902-17-5 und (11) mit der CAS-Nummer 89106-94-5 eingesetzt werden:

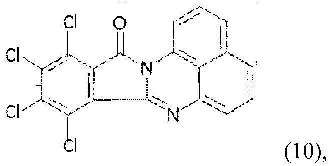

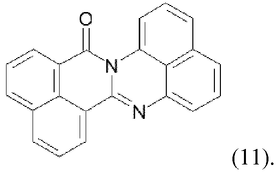

Als violette Farbmittel werden bevorzugt Farbmittel der Formeln (12) mit der CAS-Nummer 61951-89-1, (13), erhältlich unter dem Namen "Macrolex Violet B" von der Lanxess AG, mit der CAS-Nummer 81-48-1, oder (14a/14b) eingesetzt: 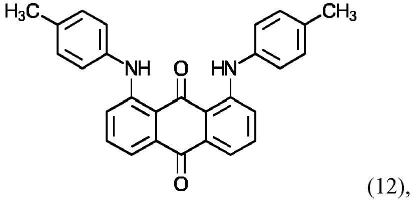 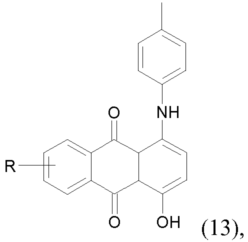 wobei R ausgewählt ist aus der Gruppe, die aus H und p-Methylphenylamin-Rest besteht; bevorzugt ist R = H; 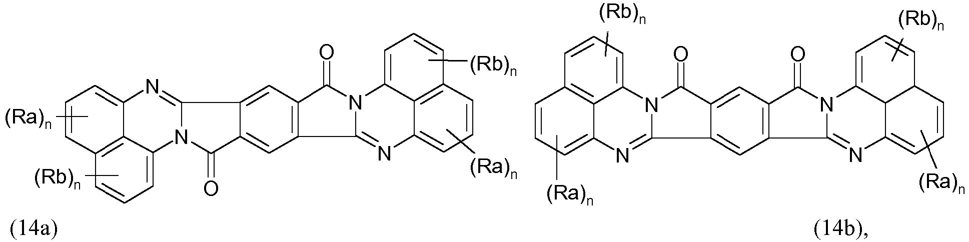 wobei
- Ra und Rb unabhängig voneinander für einen linearen oder verzweigten Alkylrest oder Halogen stehen, bevorzugt für Methyl, Ethyl, Propyl, Isopropyl, Butyl, Isobutyl, tert.-Butyl, Pentyl, Neopentyl, Hexyl, Thexyl, oder Cl, weiter bevorzugt für Methyl, Cl und besonders bevorzugt für Cl stehen,
- n unabhängig vom jeweiligen R für eine natürliche Zahl zwischen 0 und 3 steht, wobei der Rest für n=0 Wasserstoff ist.

In einer bevorzugten Ausführungsform sind Ra und/oder Rb Cl und stehen in o- und/oder p-Positionen zu den Kohlenstoffatomen, welche die Aminofunktionalitäten tragen, wie z.B. diorthochlornapthalino-, di-ortho, mono-para-chlornaphthalino, sowie mono-ortho-naphthalino. Ferner stellen in einer bevorzugten Ausführungsform Ra und Rb jeweils einen tert.-Butylrest dar, welcher sich bevorzugt in meta-Position zu den Kohlenstoffatomen, welche die Stickstofffunktionalitäten tragen, befindet.

In einer besonders bevorzugten Ausführungsform ist in allen Ringen n=0, so dass alle Ra und Rb = H sind.

Ferner können Farbmittel eingesetzt werden, die der Formel (15), erhältlich unter dem Namen "Macrolex RedViolet R", CAS-Nummer 6408-72-6, entsprechen:

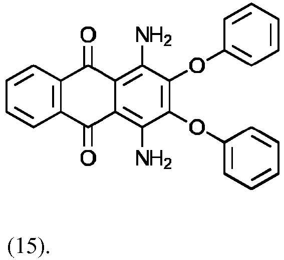

Als gelbe Farbmittel werden bevorzugt Farbmittel der Formeln (16), erhältlich unter dem Namen "Macrolex Gelb 3G" mit der CAS-Nummer 4702-90-3, und/oder (17), erhältlich unter dem Namen "Macrolex Orange 3G" (CAS-Nummer 6925-69-5, C.I. 564100), eingesetzt:

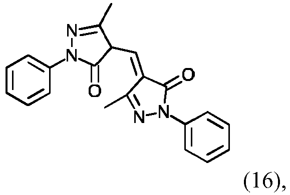

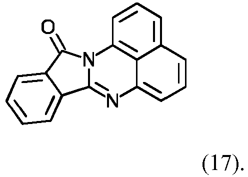

Ferner ist es möglich, Farbmittel der Formeln (18), erhältlich unter dem Namen "Oracet Yellow 180" mit der CAS-Nummer 13676-91-0, (19) mit der CAS-Nummer 30125-47-4 und/oder (20), erhältlich unter dem Namen "Oracet Orange 220; Solvent Orange 116" mit der CAS-Nummer 669005-94-1, einzusetzen.

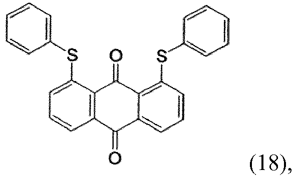

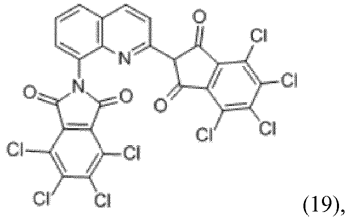

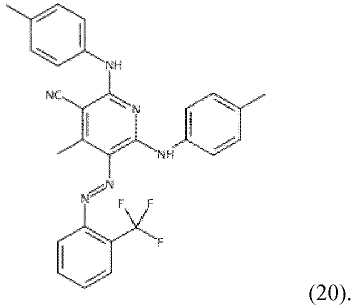

Die Gruppe iv) der weiteren Farbmittel umfasst bevorzugt weniger als 0,10 Gew.-% an Farbmitteln, die sich nicht den Gruppen ii), iii) oder den Farbmitteln der Strukturen (16) bis (20) zuordnen lassen. Bevorzugt besteht die Gruppe iv) der weiteren Farbmittel nur aus Farbmitteln der Strukturen (16) bis (20).

Grundsätzlich können aber neben den oben beschriebenen Farbmitteln ggf. zusätzlich weitere Farbmittel (Komponente iv) eingesetzt werden. Solche, die bevorzugt sind, sind Heliogen Grün Typen (wie z.B. Heliogen Grün K 8730; CAS 1328-53-6; Pigment Green 7; C.I. 74260).

Bevorzugt aber sind die Farbmittel der Zusammensetzung der Substratschicht ausschließlich aus den Farbmitteln der Formeln (1) bis (20) ausgewählt.

Die Zusammensetzung enthält vorzugsweise weniger als 0,005 Gew.-%, weiter bevorzugt weniger als 0,001 Gew.-% Ruß und insbesondere bevorzugt ist sie frei von Ruß.

Die genannte geringe Transmission ergibt sich beispielsweise für Zusammensetzungen, enthaltend die Farbmittelkombination

Macrolex Violett 3R der Firma Lanxess AG (CAS 61951-89-1, Solvent Violet 36, Color-Index-Nummer 61102), ein Anthrachinonfarbstoff: 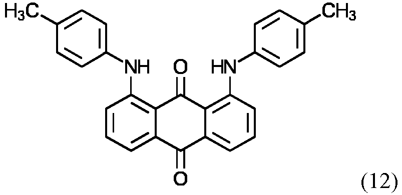 und Macrolex Grün 5B der Firma Lanxess AG (CAS 128-80-3, Solvent Green 3, Color Index-Nummer 61565), ebenfalls ein Anthrachinonfarbstoff: 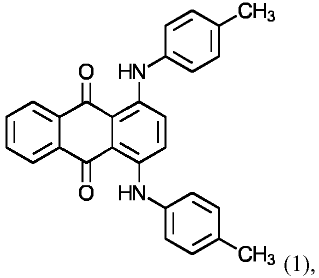 beispielsweise jeweils 0,1 Gew.-% von beiden dieser Farbmittel, bezogen auf die Gesamtzusammensetzung.

Die Gesamtkonzentration an Farbmitteln, insbesondere an solchen der genannten Formeln, beträgt bevorzugt mindestens 0,13 Gew.-%, weiter bevorzugt mindestens 0,15 Gew.-%, besonders bevorzugt mindestens 0,18 Gew.-%.

Die Zusammensetzung für das Substratschichtmaterial sollte möglichst bei den für Thermoplaste üblichen Temperaturen, d.h. bei Temperaturen oberhalb von 300 °C, wie z.B. bei 350 °C, verarbeitbar sein, ohne dass sich bei der Verarbeitung die optischen Eigenschaften, z.B. der Tiefenglanz, oder die mechanischen Eigenschaften deutlich verändern.

Die Zusammensetzungen, welche Bereiche der bzw. die Substratschicht formen und auf einem thermoplastischen Polymer, bevorzugt auf aromatischem Polycarbonat, basieren, enthalten neben den Farbmitteln bevorzugt ein oder mehrere weitere, übliche Additive. Solche sind z.B. in EP-A 0 839 623, WO-A 96/15102, EP-A 0 500 496 oder "Plastics Additives Handbook", Hans Zweifel, 5th Edition 2000, Hanser Verlag, München beschrieben, z.B. Entformer, UV-Absorber, Thermostabilisatoren, Flammschutzmittel, Antistatika und/oder Fließverbesserer.

Auch hier gilt, dass den Zusammensetzungen grundsätzlich zugesetzt werden kann, was die Funktionsfähigkeit des Sensor-Systems nicht signifikant beeinträchtigt.

Besonders bevorzugt enthalten die Zusammensetzungen weniger als 0,1 Gew.-%, ganz besonders bevorzugt sind die Zusammensetzungen der Substratschicht frei von Streuadditiven, z.B. solchen auf Basis von Acrylat, Polyethylen, Polypropylen, Polystyrol, Glas, Aluminiumoxid und/oder Siliciumdioxid. Ferner enthält die Zusammensetzung besonders bevorzugt weniger als 0,1 Gew.-%, ganz besonders bevorzugt ist sie frei von Weißpigmenten o.ä. Pigmenten wie z.B. Titandioxid, Kaolin, Bariumsulfat, Zinksulfid, Aluminiumoxid, Aluminiumhydroxid, Quarzmehl, von Interferenzpigmenten und/oder Perlglanzpigmenten, d.h. plättchenförmigen Partikeln wie Glimmer, Graphit, Talk, SiOz, Kreide und/oder Titandioxid, beschichtet und/oder unbeschichtet. Ferner enthält die Zusammensetzung besonders bevorzugt weniger als 0,1 Gew.-%, ganz besonders bevorzugt ist die Zusammensetzung frei von nanopartikulären Systemen wie Ruß, Nanotubes, Metallpartikeln, Metalloxidpartikeln. Bevorzugt enthält die Zusammensetzung auch weniger als 0,1 Gew.-%, besonders bevorzugt ist sie frei von Pigmenten auf Basis von unlöslichen Pigmenten, wie sie z.B. in DE 10057165 A1 und in WO 2007/135032 A2 beschrieben sind.

Besonders bevorzugt enthalten die Zusammensetzungen Entformungsmittel auf Basis eines Fettsäureesters, bevorzugt eines Stearinsäureesters, insbesondere bevorzugt auf Pentaerythritbasis. Bevorzugt werden Pentaerythrittetrastearat (PETS) und/oder Glycerinmonostearat (GMS) eingesetzt.

Optional enthält die für Bereiche der bzw. für die Substratschicht eingesetzte Zusammensetzung weiterhin einen Ultraviolett-Absorber. Geeignete Ultraviolett-Absorber sind Verbindungen, die eine möglichst geringe Transmission unterhalb 400 nm und eine möglichst hohe Transmission oberhalb von 400 nm besitzen. Derartige Verbindungen und deren Herstellung sind literaturbekannt und sind beispielsweise in EP 0 839 623 A1, WO 1996/15102 A2 und EP 0 500 496 A1 beschrieben. Für den Einsatz in der erfindungsgemäßen Zusammensetzung besonders geeignete Ultraviolett-Absorber sind Benzotriazole, Triazine, Benzophenone und/oder arylierte Cyanoacrylate.

In einer besonders bevorzugten Ausführungsform enthält die für die Substratschicht eingesetzte Zusammensetzung UV-Absorber.

Folgende Ultraviolett-Absorber sind beispielsweise geeignet: Hydroxy-Benzotriazole, wie 2-(3',5'-Bis-(1,1-dimethylbenzyl)-2'-hydroxy-phenyl)-benzotriazol (Tinuvin^{®} 234, BASF AG. Ludwigshafen), 2-(2'-Hydroxy-5'-(tert.-octyl)-phenyl)-benzotriazol (Tinuvin^{®} 329, BASF AG. Ludwigshafen), 2-(2'-Hydroxy-3'-(2-butyl)-5'-(tert.butyl)-phenyl)-benzotriazol (Tinuvin^{®} 350, BASF AG. Ludwigshafen), Bis-(3-(2H-benztriazolyl)-2-hydroxy-5-tert.-octyl)methan, (Tinuvin^{®} 360, BASF AG. Ludwigshafen), (2-(4,6-Diphenyl-1,3,5-triazin-2-yl)-5-(hexyloxy)-phenol (Tinuvin^{®} 1577, BASF AG. Ludwigshafen), die Benzophenone 2,4-Dihydroxy-benzophenon (Chimasorb^{®} 22, BASF AG. Ludwigshafen) oder 2-Hydroxy-4-(octyloxy)-benzophenon (Chimassorb^{®} 81, BASF AG. Ludwigshafen), 2-Cyano-3,3-diphenyl-2-propensäure, 2,2-Bis[[(2-cyano-1-oxo-3,3-diphenyl-2-propenyl)oxy]-methyl]-1,3-propandiylester (9CI) (Uvinul^{®} 3030, BASF AG Ludwigshafen), 2-[2-Hydroxy-4-(2-ethylhexyl)oxy]phenyl-4,6-di(4-phenyl)phenyl-1,3,5-triazin (CGX UVA 006, BASF AG. Ludwigshafen) oder Tetraethyl-2,2'-(1,4-phenylen-dimethyliden)-bismalonat (Hostavin^{®} B-Cap, Clariant AG). Es können auch Mischungen dieser Ultraviolett-Absorber eingesetzt werden.

Weiter bevorzugt enthalten die thermoplastischen Zusammensetzungen außerdem mindestens einen weiteren Thermo- bzw. Verarbeitungsstabilisator.

Als solche bevorzugt sind Phosphite und Phosphonite sowie Phosphine. Beispiele sind Triphenylphosphit, Diphenylalkylphosphit, Phenyldialkylphosphit, Tris(nonylphenyl)phosphit, Trilaurylphosphit, Trioctadecylphosphit, Distearylpentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,4-di- cumylphenyl)pentaerythritoldiphosphit, Bis(2,6-di-tert-butyl-4-methylphenyl)penta-erythritol-diphosphit, Diisodecyloxypentaerythritoldiphosphit, Bis(2,4-di-tert-butyl-6-methylphenyl)-pentaerythritoldiphosphit, Bis(2,4,6-tris(tert-butylphenyl)pentaerythritoldiphosphit, Tristearylsorbitoltriphosphit, Tetrakis(2,4-di-tert-butylphenyl)-4,4'-biphenylendiphosphonit, 6-Isooctyloxy-2,4,8,10-tetra-tert-butyl-12H-dibenz[d,g]-1,3,2-dioxaphosphocin, Bis(2,4-di-tert-butyl-6-methylphenyl)methylphosphit, Bis(2,4-di-tert-butyl-6-methylphenyl)ethylphosphit, 6-Fluoro-2,4,8,10-tetra-tert-butyl-12-methyl-dibenz[d,g]-1,3,2-dioxaphosphocin, 2,2',2"-Nitrilo-[triethyltris(3,3',5,5'-tetra-tert-butyl-1,1'-biphenyl-2,2'-diyl)phosphit], 2-Ethylhexyl(3,3',5,5'-tetra-tert-butyl-1,1'-biphenyl-2,2'-diyl)phosphit, 5-Butyl-5-ethyl-2-(2,4,6-tri-tert-butylphenoxy)-1,3,2-dioxaphosphiran, Bis(2,6-di-ter-butyl-4-methylphenyl)pentaerythritol-diphosphit, Triphenylphosphin (TPP), Trialkylphenylphosphin, Bisdiphenylphosphino-ethan oder ein Trinaphthylphosphin. Insbesondere bevorzugt werden Triphenylphosphin (TPP), Irgafos^{®} 168 (Tris(2,4-di-tert-butyl-phenyl)-phosphit) oder Tris(nonylphenyl)phosphit oder deren Mischungen eingesetzt. Ferner können Alkylphosphate z. B. Mono-, Di- und Trihexylphosphat, Triisoctylphosphat und Trinonylphosphat eingesetzt werden.

Ferner können phenolische Antioxidantien wie alkylierte Monophenole, alkylierte Thioalkylphenole, Hydrochinone und alkylierte Hydrochinone eingesetzt werden. Besonders bevorzugt werden Irganox^{®} 1010 (Pentaerythrit- 3-(4-hydroxy-3,5-di-tert-butylphenyl)propionat; CAS: 6683-19-8) und/oder Irganox 1076^{®} (2,6-Di-tert-butyl-4-(octadecanoxycarbonylethyl)phenol) eingesetzt.

Die Farbmittel und sonstigen Additive können beispielsweise in die Zusammensetzung eingebracht werden, indem 2 bis 5 Gew.-%, bezogen auf die Gesamtzusammensetzung, Polycarbonat-Pulver, enthaltend die Farbmittel und sonstigen Additive, mit einem Polycarbonat-Basismaterial vermischt wird, wobei das Polycarbonat in Pulverform eine andere MVR ausweisen kann als das Basismaterial. Das Molekulargewicht bzw. die MVR des Polycarbonats der Zusammensetzung ergibt sich aus dem gesamten in der Zusammensetzung enthaltenen Polycarbonat.

Da die Abdeckungen für den Infrastruktur- oder Transportbereich relativ groß sein können und eine komplexe Geometrie aufweisen können, sollte die für die Substratschicht verwendete thermoplastische Zusammensetzung möglichst eine ausreichende Fließfähigkeit aufweisen, um im Spritzgussprozess, wie z.B. speziell dem Spritzprägeverfahren, zu entsprechenden Formkörpern verarbeitet werden zu können.

Der Mehrschichtkörper umfasst neben der Substratschicht noch eine oder mehrere Decklackschichten. Diese erfüllen im erfindungsgemäßen Sinne bevorzugt die Funktion von Kratzfestschichten und/oder Witterungsschutzschichten. Die Decklackschichten sind entweder einseitig oder beidseitig aufgebracht, zumindest aber auf der Seite der Abdeckung aufgebracht, die dazu bestimmt ist, auf der Außenseite der im Fahrzeug, insbesondere KFZ-Fahrzeug, verbauten Abdeckung zu liegen, d.h. auf der Seite, die zur Umwelt hin orientiert ist. Auf der Seite der Abdeckung, die dazu bestimmt ist, zum Fahrzeuginneren hin zu zeigen, können optional noch zusätzliche Funktionsschichten wie Antifog-, Antidust- und/oder Antireflexschichten vorliegen, sofern diese das Signal des LiDAR-Sensors nicht signifikant dämpfen.

Die auf der zur Umgebung des Fahrzeugs orientierten Seite der Substratschicht liegende Decklackschicht a besteht aus einem Kratzfest-Lack (Hard-Coat, Decklack). Dieser ist ein Polysiloxanlack, hergestellt nach dem Sol-Gel-Prozess. Das in der Decklackschicht enthaltene Siliciumdioxid weist einen D₉₀, bestimmt mittels Rastertransmissionselektronenmikroskopie, von weniger als 0,50 µm, bevorzugt weniger als 0,20 µm, weiter bevorzugt weniger als 100 nm, besonders bevorzugt weniger als 50 nm, ganz besonders bevorzugt weniger als 30 nm, äußerst bevorzugt 15 bis 30 nm, auf. Ganz besonders bevorzugt beträgt auch der D₁₀₀, bestimmt mittels Rastertransmissionselektronenmikroskopie, weniger als 50 nm, insbesondere weniger als 30 nm. Die Decklackschicht enthält keine Partikel, d.h. Partikel von anderen Füllstoffen etc., mit einem D₉₀, bestimmt mittels Rastertransmissionselektronenmikroskopie, ≥ 0,50.

Dabei bedeutet "auf der zur Umgebung des Fahrzeugs orientierten Seite" die Seite des Substratmaterials, die der Seite, auf welcher der LiDAR-Sensor angeordnet ist, gegenüber liegt.

Die auf der zur Umgebung des Fahrzeugs orientierten Seite der Substratschicht liegende Decklackschicht enthält besonders bevorzugt außerdem mindestens einen UV-Absorber. Die Decklackschicht ist so gewählt, dass sie eine hohe Abrieb- und Kratzfestbeständigkeit aufweist.

Es sind verschiedene Methoden bekannt, um eine Decklackschicht auf Kunststoffartikeln herzustellen. Diese Systeme können beispielsweise über Tauchverfahren, Spincoating, Sprühverfahren oder eine Fließbeschichtung, bevorzugt über Tauch- oder Fließverfahren, aufgebracht werden. Die Aushärtung kann thermisch oder mittels UV-Bestrahlung erfolgen. Die Decklackschicht kann z.B. direkt oder nach Vorbereitung der Substratoberfläche mit einer Grundierung (Primer) aufgetragen werden. Ferner kann die Decklackschicht über Plasma-gestützte Polymerisationsverfahren aufgebracht werden, insbesondere über ein SiO₂-Plasma. Antibeschlags- oder Antireflex-Beschichtungen, insbesondere solche, die auf die Seite aufgebracht werden sollen, die dazu bestimmt sind, zum Inneren des Fahrzeugs gerichtet zu sein, können ebenfalls über Plasmaverfahren hergestellt werden. Weiterhin ist es möglich, über bestimmte Spritzgussverfahren, wie z.B. das Hinterspritzen von oberflächenbehandelten Folien, eine Decklackschicht auf den resultierenden Formkörper aufzubringen. In der Decklackschicht können verschiedene Additive, wie z.B. UV-Absorber, abgeleitet z.B. von Triazolen, Triazinen, Resorcinen oder Benzophenonen, vorhanden sein.

In einer bevorzugten Ausführungsform, die eine besonders gute Bewitterungsstabilität bewirkt, weist die Abdeckung eine Decklackschicht mit der Funktion einer Kratzfest- und/oder Witterungsschutzschicht (Schicht a') auf Polysiloxanbasis auf, enthaltend
i. mindestens einen UV-Absorber aus der Gruppe der Benzophenone, Resorcine, 2-(2-Hydroxyphenyl-)Bentriazole, Hydroxyphenyl-s-Triazine, 2-Cyanacrylate, Oxalanilide
   und/oder einen UV-Inhibitor aus der Gruppe der sterisch gehinderten Amine (HALS), insbesondere basierend auf 2,2,6,6-Tetramethylpiperidin oder dessen Derivaten; insbesondere bevorzugt enthält die Decklackschicht einen UV-Absorber auf Basis von Benzophenon bzw. Dibenzophenon mit einer Silylseitenkette,
ii. mindestens eine Kombination von einem organo-modifizierten Silan mit einem Kiesel-Sol, wobei das organo-modifizierte Silan vorzugsweise ein Methyltrialkoxy- oder Dimethyldialkoxysilan ist, wobei die Decklackschicht Siliciumdioxid-Partikel mit einem D₉₀, bestimmt mittels Rastertransmissionselektronenmikroskopie, von weniger als 0,50 µm und keine Partikel mit einem D₉₀, bestimmt mittels Rastertransmissionselektronenmikroskopie, >_ 0,50 µm enthält,
und optional, in einer weiter bevorzugten Ausführungsform, zusätzlich eine auf der Substratschicht angeordnete, als Haftvermittler zwischen der Decklackschicht auf Polysiloxanbasis und der Substratschicht wirkende, Primerschicht auf Basis eines Polymethylmethacrylats (Schicht a"), enthaltend
mindestens einen UV-Absorber aus der Gruppe der Benzophenone, der Resorcine, 2-(2-Hydroxyphenyl-)Bentriazole, Hydroxyphenyl-s-Triazine, 2-Cyanacrylate, Oxalanilide und/oder sterisch gehinderten Amine (HALS), insbesondere basierend auf 2,2,6,6-Tetramethylpiperidin sowie dessen Derivaten,
wobei
die Dicke der Primerschicht 0,3 µm bis 8 µm, bevorzugt 1,0 µm bis 4,0 µm, beträgt.

Der Anteil des UV-Absorbers in der Primerschicht beträgt bis zu 35 Gew.-%. "Auf Basis von X" in Bezug auf den UV-Absorber bedeutet, dass sich seine Struktur von der Verbindung der Formel X ableitet und ggf. eine oder mehrere Substitutionen, Annelierungen etc. aufweist.

Besonders bevorzugt umfasst die Abdeckung neben der Substratschicht und einer oder mehreren Decklackschichten, ggf. auch einer oder mehreren Primerschichten, keine weiteren Schichten.

Die dabei verwendete Primerzusammensetzung (Primerlösung) zur Ausbildung der Primerschicht besteht besonders bevorzugt aus
a) einem oder mehreren Poly(methyl)methacrylat-Bindemitteln,
b) einem oder mehreren Lösemitteln, bevorzugt aus der Gruppe der Glykolether,
c) einem oder mehreren UV-Absorbern, und
d) optional einem oder mehreren sterisch gehinderten Aminen (HALS) und
e) ggf. Verlaufsadditiven. Diese sind Additive, die dazu dienen, eine bessere Benetzung des Untergrundes, d.h. der zu beschichtenden Oberfläche, zu erzielen und/oder um die Oberflächenglätte zu verbessern. So dient das Verlaufsadditiv in der Primerschicht zur besseren Benetzung der Substratschicht.

Die dabei verwendete Decklackschichtzusammensetzung besteht besonders bevorzugt aus
a) einem oder mehreren Alkoxysilanen, bevorzugt Methyltrimethoxysilan oder Methyltriethoxysilan,
b) einem Kieselsäure-Sol mit einer bevorzugten mittleren Partikelgröße D₅₀, bestimmt mittels Rastertransmissionselektronenmikroskopie, von weniger als 50 nm, insbesondere von 15 bis 30 nm,
c) einem oder mehreren Lösemitteln, bevorzugt aus der Gruppe der Alkohole und Wasser,
d) einem oder mehreren UV-Absorbern, bevorzugt auf Basis von Benzophenon nach Struktur (I) bzw. Dibenzophenon nach Struktur (II) und/oder (III) mit einer Silylseitenkette 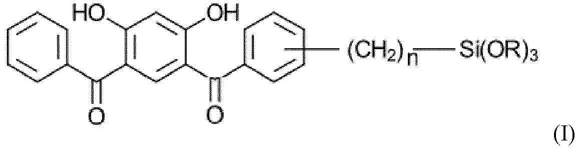 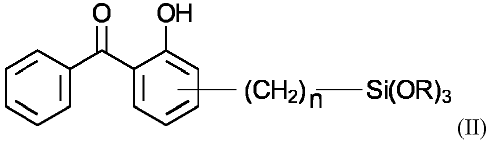 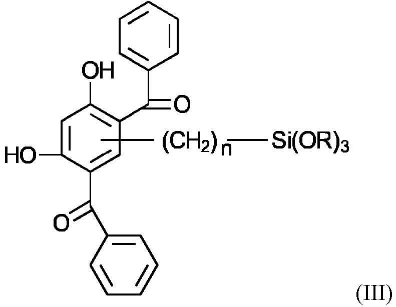 mit n = 1 bis 10, bevorzugt 2 bis 4; R = Methyl, Ethyl, Propyl,
e) ggf. einem oder mehreren sterisch gehinderten Aminen (HALS) und
f) ggf. einem oder mehreren Poly(methyl)methacrylat-Bindemitteln und
g) ggf. Verlaufsadditiven.

Unter "Derivaten" werden erfindungsgemäß solche Verbindungen verstanden, deren Molekülstruktur an der Stelle eines H-Atoms oder einer funktionellen Gruppe ein anderes Atom oder eine andere Atomgruppe besitzt bzw. bei denen ein oder mehrere Atome/Atomgruppen entfernt wurden. Die Stammverbindung ist somit noch weiterhin erkennbar.

Es wird bevorzugt ein UV-Absorber enthaltender Primer eingesetzt, um die Haftung des Kratzfestlackes auf der Substratschicht zu verbessern. Der Primer enthält bevorzugt weitere Stabilisatoren wie z.B. HALS-Systeme (Stabilisatoren auf Basis sterisch gehinderter Amine), Haftvermittler und/oder Fließhilfsmittel. Das jeweilige Harz, welches das Basismaterial der Primerschicht bildet, kann aus einer Vielzahl von Materialien ausgewählt werden und ist beispielsweise in Ullmann's Encylopedia of Industrial Chemistry, 5th Edition, Vol. A18, pp. 368-426, VCH, Weinheim 1991 beschrieben. Es können Polyacrylate, Polyurethane, Phenol-basierte, Melamin-basierte, Epoxy- und Alkyd-Systeme oder Mischungen dieser Systeme eingesetzt werden. Das Harz wird meistens in geeigneten Lösemitteln gelöst - häufig in Alkoholen. Abhängig vom gewählten Harz kann die Aushärtung bei Raumtemperatur oder bei erhöhten Temperaturen erfolgen. Bevorzugt werden Temperaturen zwischen 20°C (Raumtemperatur) und 130 °C eingesetzt - häufig, nachdem ein Großteil des Lösemittels kurzzeitig bei Raumtemperatur entfernt wurde. Kommerziell erhältliche Primer-Systeme sind z.B. SHP470, SHP470-FT2050 und SHP401 der Firma Momentive Performance Materials. Derartige Beschichtungen sind z.B. in US 6,350,512 B1, US 5,869,185 A, EP 1308084 A1 und WO 2006/108520 A1 beschrieben.

Die Polysiloxanschicht enthält bevorzugt siliciumorganische Verbindungen der Formel RₙSiX₄₋ₙ, und/oder partielle Kondensate derselben,
wobei die Reste R gleich oder verschieden sind und für einen linearen oder verzweigten, gesättigten oder ein- oder mehrfach ungesättigten oder aromatischen Kohlenwasserstoffrest stehen,
die Reste X gleich oder verschieden sind und für hydrolysierbare Gruppen oder Hydroxylgruppen stehen, bevorzugt für Halogene, insbesondere Chlor oder Brom, Alkoxygruppen, Alkylcarbonylgruppen oder Acyloxygruppen stehen und
n 0, 1, 2 oder 3, bevorzugt 1 oder 2, ganz besonders bevorzugt 1, ist.

R steht bevorzugt für gesättigte, verzweigte oder unverzweigte Alkylreste mit 1 bis 20 Kohlenstoffatomen und/oder für ein- oder mehrfach ungesättigte verzweigte oder unverzweigte Alkenylreste mit 2 bis 20 Kohlenstoffatomen oder aromatische Gruppen mit 6 bis 12 Kohlenstoffatomen. Weiter bevorzugt weisen die Alkyl- bzw. Alkenylreste bis zu 12, noch weiter bevorzugt bis zu 8 Kohlenstoffatome auf. Besonders bevorzugt sind alle Reste Methyl- und/oder Phenylgruppen.

Besonders bevorzugt steht X für eine Alkoxygruppe, ganz besonders bevorzugt für eine C₁- bis C₄-Alkoxygruppe, beispielsweise für eine Methoxy- oder eine Ethoxygruppe.

Die Silicium-Verbindungen RₙSiX₄₋ₙ sind über die Reste X hydrolysierbar und kondensierbar. Über diese hydrolytisch kondensierbaren Gruppen wird ein anorganisches Netzwerk mit Si-O-Si-Einheiten aufgebaut. Die Reste R sind unter den üblichen Kondensationsbedingungen im Gegensatz zu den Resten X gegenüber einer Hydrolyse stabil.

Bei Verwendung der vorgenannten Siloxan-basierten Decklacksysteme sind Trockenschichtdicken von 3 µm - 20 µm bevorzugt, weiter bevorzugt 3,5 µm - 15 µm, besonders bevorzugt 4 µm - 12 µm. Unter "Trockenschichtdicke" wird die Schichtdicke des Lackes nach Applikation, Verdampfen des Lösemittels und anschließender thermischer oder UV-Härtung gemeint. Diese Schichtdicke gilt allgemein für bevorzugte Decklackschichten. Die Schichtdicke kann beispielsweise mittels Weißlichtinterferometrie (z.B. mittels eines Weißlichtinterferometers der Firma Eta Optic; ETA-SST) bestimmt werden, was bevorzugt ist. Ferner kann über Querschnittspräparation und mikroskopische Erfassung (über AFM oder Rasterelektronenmikroskopie) der Schichten über Materialkontrast die Dicke erfasst werden.

Optional kann, wenn auf eine Primerschicht verzichtet werden soll, die Decklackschicht a' ein Poly(meth)acrylat-Bindemittel als haftvermittelnde Komponente enthalten. Handelsübliche Bindemittel können Joncryl-Typen der Firma BASF sein.

Wie zuvor beschrieben, können anstelle von Primer/Decklackschicht-Kombinationen auch Einkomponenten-Hybrid-Systeme, entweder thermisch- oder UV-härtend, für die Mehrschichtkörper, welche die Abdeckung bilden, eingesetzt werden.

Thermisch härtende Systeme sind u.a. Hybridsysteme und sind z.B. in EP 0570165 A2, WO 2008/071363 A2 oder DE 2804283 A beschrieben. Hybrid-Systeme sind z. B. als thermisch härtende Systeme bekannt und kommerziell erhältlich. UV-härtende Systeme, wie sie heute auch auf Kunststoffabdeckscheiben verwendet werden, sind beispielhaft kommerziell erhältliche UV- oder thermisch härtende Lacksysteme und z.B. bei der Firma Momentive Performance Materials und der Firma Redspot erhältlich.

In einem besonders bevorzugten Verfahren zur Herstellung der Abdeckungen für die erfindungsgemäßen Fahrzeuge erfolgt die Applikation der Decklackschicht und ggf. der Primerschicht über das Flutverfahren, da es zu beschichteten Teilen mit hoher optischer Qualität führt.

Das Flutverfahren kann manuell mit Schlauch oder geeignetem Beschichtungskopf oder automatisch im Durchlauf über Flutlackierroboter- und gegebenenfalls Schlitzdüsen erfolgen. Hierbei können die Bauteile, sowohl hängend als auch in einem entsprechenden Warenträger gelagert, beschichtet werden. Bei größeren und/oder 3D-Bauteilen - d.h. Bauteilen mit dreidimensionaler Oberfläche, die also eine von einer Platte abweichende Geometrie aufweisen- wird das zu beschichtende Teil in einen geeigneten Warenträger eingehängt oder aufgesetzt.

Weitere mögliche Applikationsverfahren sind Tauchen, alle Sprüh- und Spritzverfahren, Rakeln, Walzen, oder Spincoating, bevorzugt Sprühen und Spritzen, z.B. mit Spritzpistolen, in Flachsprühanlagen oder mittels Hochrotationsglocken. Hierbei können die Bauteile, sowohl hängend als auch in einem entsprechenden Warenträger gelagert, beschichtet werden.

Bei Kleinteilen kann die Beschichtung auch per Hand durchgeführt werden. Hierbei wird die zu schichtende flüssige Primer- oder Lacklösung zur Ausbildung der Schutzschicht ausgehend von der oberen Kante des Kleinteiles in Längsrichtung über die Platte gegossen, während gleichzeitig der Ansatzpunkt des Lackes auf der Platte von links nach rechts über die Plattenbreite geführt wird. Die lackierten Platten werden senkrecht an einer Klammer hängend nach den jeweiligen Herstellervorgaben abgelüftet und gehärtet.

Völlig überraschend wurde gefunden, dass sich organische Lacksysteme weniger gut für eine Vorrichtung, enthaltend einen LiDAR-Sensor, eignen. Dazu gehören z.B. UV-vernetzbare Systeme wie Urethanacrylate mit und ohne anorganische Nanoteilchen.

Besonders bevorzugt ist ein
Sensor-System und weitergehend insbesondere ein Fahrzeug, umfassend
a) einen LiDAR-Sensor, der Laserlicht mit einer Wellenlänge im Bereich von 800 bis 1600 nm, insbesondere von 880 nm bis 950 nm und/oder von 1520 bis 1570 nm, aussendet, und
b) eine den LiDAR-Sensor teilweise oder ganz umgebende Abdeckung, umfassend einen Mehrschichtkörper, umfassend in dieser Reihenfolge
   eine Substratschicht, umfassend eine thermoplastische Zusammensetzung auf Basis von aromatischem Polycarbonat mit einer Schmelzvolumenrate MVR von 8 bis 20 cm³/(10 min), bestimmt nach ISO 1133-1:2012-03 (300°C, 1,2 kg),
   wobei die Substratschicht eine Lichttransmission im Bereich von 380 bis 780 nm von weniger als 25,0 %, bevorzugt bis zu 20 %, weiter bevorzugt weniger als 15 %, bestimmt bei einer Schichtdicke von 4 mm nach DIN ISO 13468-2:2006 (D65, 10°), aufweist
   und wobei die Substratschicht in ihrer jeweiligen Dicke eine Transmission für IR-Strahlung im Bereich im Bereich von 800 bis 1600 nm, insbesondere im Bereich von 880 nm bis 950 nm und/oder von 1520 bis 1570 nm von mindestens 55 %, bevorzugt mindestens 60 %, besonders bevorzugt mindestens 65%, bestimmt nach DIN ISO 13468-2:2006, aufweist,
   und wobei die thermoplastische Zusammensetzung aus
      i) mindestens 85 Gew.-%, weiter bevorzugt mindestens 95 Gew.-% aromatischem Polycarbonat,
      ii) mindestens einem grünen und/oder einem blauen Farbmittel, ausgewählt aus der Gruppe, bestehend aus den Farbmitteln der Formeln (1), (2a-c), (3), (4a), (4b), (5), (6), (7) und/oder (8) und
      iii) mindestens einem roten und/oder violetten Farbmittel, ausgewählt aus der Gruppe, bestehend aus den Farbmitteln der Formeln (9), (10), (11), (12), (13) (14a), (14b) und/oder (15),
      iv) optional weiteren Farbmitteln, bevorzugt ausgewählt aus der Gruppe, bestehend aus den Farbmitteln der Formeln (16), (17), (18), (19) und/oder (20),
      v) optional Thermostabilisatoren, Entformungsmitteln, UV-Absorbern, Flammschutzmitteln, Antistatika und/oder Fließverbesserern, bevorzugt in einer Menge von 0 bis 10 Gew.-%, weiter bevorzugt 0 bis 3 Gew.-%,
      vi) 0 bis weniger als 5,0 Gew.-% weiteren thermoplastischen Polymeren,
      vii) 0 bis weniger als 0,005 Gew.-% Ruß besteht,
   wobei die Summe der Farbmittel ii) bis iv) > 0,001 Gew.-%, weiter bevorzugt > 0,005 Gew.-%, noch weiter bevorzugt > 0,008 Gew.-% beträgt,
   und wobei die Dicke der Substratschicht 1,0 bis 6,0 mm, bevorzugt 2 bis 4 mm, weiter bevorzugt 2,0 bis 4,0 mm, beträgt,
   ggf. eine Primerschicht auf Basis von Polymethylmethacrylat und enthaltend mindestens einen UV-Absorber,
      und
   eine Decklackschicht auf Polysiloxanbasis, enthaltend eine Kombination eines organo-modifizierten Silans mit einem Kiesel-Sol, wobei die Decklackschicht Siliciumdioxid-Partikel mit einem D₉₀, bestimmt mittels Rastertransmissionselektronenmikroskopie, von weniger als 0,50 µm und keine Partikel mit einem D₉₀, bestimmt mittels Rastertransmissionselektronenmikroskopie, >_ 0,50 µm enthält,
   wobei die Decklackschicht auf der Seite der Substratschicht ist, die der Seite der Substratschicht, auf welcher der LiDAR-Sensor angeordnet ist, gegenüberliegt.

Ganz besonders bevorzugt ist ein
Sensor-System, weitergehend insbesondere auch ein Fahrzeug, umfassend
a) einen LiDAR-Sensor, der Laserlicht mit einer Wellenlänge im Bereich von 800 bis 1600 nm, insbesondere von 880 nm bis 950 nm und/oder von 1520 bis 1570 nm, aussendetund
b) eine den LiDAR-Sensor teilweise oder ganz umgebende Abdeckung umfassend einen, bevorzugt bestehend aus einem Mehrschichtkörper, umfassend in dieser Reihenfolge
   - eine Substratschicht auf Basis von aromatischem Polycarbonat mit einer Schmelzvolumenrate MVR von 8 bis 20 cm³/(10 min), bestimmt nach ISO 1133-1:2012-03 (300°C, 1,2 kg), aufweisend eine Lichttransmission im Bereich von 380 bis 780 nm von weniger als 1,0 %, bestimmt bei einer Schichtdicke von 4 mm nach DIN ISO 13468-2: 2006 (D65, 10°), und eine Transmission für IR-Strahlung im Bereich von 800 bis 1600 nm, insbesondere im Bereich von 880 nm bis 950 nm und/oder 1520 bis 1570 nm, von mindestens 60 %, besonders bevorzugt von mindestens 65%, bestimmt nach DIN ISO 13468-2:2006,

   wobei die thermoplastische Zusammensetzung aus
      i) mindestens 85 Gew.-%, weiter bevorzugt mindestens 95 Gew.-% aromatischem Polycarbonat,
      ii) mindestens einem grünen und/oder einem blauen Farbmittel, ausgewählt aus der Gruppe, bestehend aus den Farbmitteln der Formeln (1), (2a-c), (3), (4a), (4b), (5), (6), (7) und/oder (8), und
      iii) mindestens einem roten und/oder violetten Farbmittel, ausgewählt aus der Gruppe, bestehend aus den Farbmitteln der Formeln (9), (10), (11), (12), (13) (14a), (14b) und/oder (15),
      iv) optional weiteren Farbmitteln, bevorzugt ausgewählt aus der Gruppe, bestehend aus den Farbmitteln der Formeln (16), (17), (18), (19) und/oder (20),
      v) optional Thermostabilisatoren, Entformungsmitteln, UV-Absorbern, Flammschutzmitteln, Antistatika und/oder Fließverbesserern, bevorzugt in einer Menge von 0 bis 3 Gew.-%,
      vi) 0 bis weniger als 5,0 Gew.-% weiteren thermoplastischen Polymeren,
      vii) 0 bis weniger als 0,005 Gew.-% Ruß besteht,

   wobei die Summe der Farbmittel ii) bis iv) > 0,001 Gew.-%, weiter bevorzugt > 0,005 Gew.-%, noch weiter bevorzugt > 0,008 Gew.-% beträgt,
   und wobei die Dicke der Substratschicht 1,0 bis 6,0 mm, bevorzugt 2 bis 4 mm, weiter bevorzugt 2,0 bis 4,0 mm, beträgt,
      und
      - ggf. eine Primerschicht auf Basis von Polymethylmethacrylat und enthaltend mindestens einen UV-Absorber, und
      - eine Decklackschicht auf Polysiloxanbasis, enthaltend eine Kombination eines organo-modifizierten Silans mit einem Kiesel-Sol, wobei die Decklackschicht Siliciumdioxid-Partikel mit einem D₉₀, bestimmt mittels Rastertransmissionselektronenmikroskopie, von weniger als 50 nm, bevorzugt weniger als 30 nm, und keine Partikel mit einem D₉₀, bestimmt mittels Rastertransmissionselektronenmikroskopie, >_ 0,50 µm enthält,
   wobei die Decklackschicht auf der Seite der Substratschicht ist, die der Seite der Substratschicht, auf welcher der LiDAR-Sensor angeordnet ist, gegenüberliegt und wobei die Decklackschicht besonders bevorzugt mindestens einen UV-Absorber, bevorzugt einen in das Siloxannetzwerk eingebauten UV-Absorber, enthält. UV-Absorber, die in das Siloxannetzwerk eingebaut werden, enthalten Alkoxysilangruppen, die im Siloxanlack (verwendetes Sol-Gel-System) hydrolysieren können und beim Härten chemisch in das Siloxannetzwerk eingebunden werden.

Auf der Seite der Abdeckung, die dazu bestimmt ist, zur Fahrzeuginnenseite hin gerichtet zu sein, können Schutzschichten zur Verbesserung der Medienbeständigkeit, solche mit Antidust-, Antifog- und/oder Antireflexeigenschaften angebracht werden.

Beispielhaft aber nicht einschränkend für Antibeschlags- und Antidustbeschichtungen sind die partikelfreien MODIPER H5000 oder MODIPER H9800-UV der NOF Corporation, GXC NuGlass^{®} AFPC (Polycarbonat) der GXC Coatings oder auch Schichten, die durch Flammsilikatisieren erhalten werden.

Als Antireflexschichten gelten alle ein- oder mehrlagigen Schichtaufbauten, die als äußere Schicht eine niedrigbrechende Schicht aufweisen (n_{D} <1,5). Durch den Einsatz der zuvor beschriebenen Zusammensetzung auf Basis von aromatischem Polycarbonat für Substratschichten und die erfindungsgemäß vorgesehene Kratzfestschicht werden Abdeckungen für LiDAR-Sensoren zur Verfügung gestellt, mit denen gleichzeitig einerseits verschiedenste elektrotechnische, elektronische, elektrooptische und optische Funktionselemente abgedeckt werden können, ohne dass deren Funktion, sowohl in Bezug auf das Fahrzeug und dessen Insassen als auch in Bezug auf die Außenwelt, so eingeschränkt wird, dass sie nicht mehr bestimmungsgemäß erfüllt wird, andererseits auch für im für den Menschen sichtbaren Spektralbereich des Lichts ansprechende Färbungen erzielbar sind, insbesondere ein glasartiger Schwarzeindruck.

Die Herstellung von dreidimensional geformten Substratschichten, aber auch plattenförmigen Schichten, ausgehend von der beschriebenen Polymer-Zusammensetzung, enthaltend die oben genannten Komponenten, erfolgt mit gängigen Einarbeitungsverfahren durch Zusammenführung, Vermischen und Homogenisieren, wobei insbesondere die Homogenisierung, bevorzugt in der Schmelze unter Einwirkung von Scherkräften, stattfindet. Dazu werden das thermoplastische Polymer, bevorzugt aromatisches Polycarbonat, und die ggf. weiteren Komponenten der Polymer-Formmasse, bevorzugt der Polycarbonat-Formmasse, auf üblichen Schmelze-Mischaggregaten wie z.B. auf Ein- oder Mehrwellen-Extrudem oder auf Knetern in der Schmelze unter üblichen Bedingungen vermischt, extrudiert und granuliert. Die Additive können entweder separat als Granulate bzw. Pellets über Dosierwaagen oder Seitenfüttereinrichtungen oder auch bei erhöhter Temperatur als Schmelze mittels Dosierpumpen an geeigneter Stelle in den Feststoffförderbereich des Extruders oder in die Polymerschmelze dosiert werden. Die Masterbatches in Form von Granulaten oder Pellets können auch mit anderen partikelförmigen Verbindungen zu einer Vormischung vereinigt und dann gemeinsam über Dosiertrichter oder Seitenfüttereinrichtungen in den Feststoffförderbereich des Extruders oder in die Polymerschmelze im Extruder zugeführt werden. Bei dem Compoundier-Aggregat handelt es sich bevorzugt um einen Zweiwellenextruder, besonders bevorzugt um einen Zweiwellenextruder mit gleichsinnig rotierenden Wellen, wobei der Zweiwellenextruder ein Längen/Durchmesser-Verhältnis der Schneckenwelle bevorzugt von 20 bis 44, besonders bevorzugt von 28 bis 40 aufweist. Ein derartiger Zweiwellenextruder umfasst eine Aufschmelz- und Mischzone oder eine kombinierte Aufschmelz- und Mischzone und optional eine Entgasungszone, an der ein absoluter Druck p von bevorzugt höchstens 800 mbar, weiter bevorzugt höchstens 500 mbar, besonders bevorzugt höchstens 200 mbar eingestellt wird. Die mittlere Verweilzeit der Mischungszusammensetzung im Extruder ist bevorzugt auf maximal 120 s, besonders bevorzugt maximal 80 s, besonders bevorzugt auf max. 60 s begrenzt. Die Temperatur der Schmelze des Polymers beziehungsweise der Polymerlegierung am Austritt des Extruders beträgt in bevorzugter Ausführungsform 200°C bis 400°C.

Neben dem Extrudieren können die für die Substratschicht eingesetzten Zusammensetzungen durch Heißpressen, Spinnen, Blasformen, Tiefziehen oder Spritzgießen in die Substratschicht überführt werden. Bevorzugt ist hierbei das Spritzgießen oder Spritzprägen.

Spritzgießverfahren sind dem Fachmann bekannt und beispielsweise im "Handbuch Spritzgießen", Friedrich Johannnaber/Walter Michaeli, München; Wien: Hanser, 2001, ISBN 3-446-15632-1 oder in "Anleitung zum Bau von Spritzgießwerkzeugen", Menges/Michaeli/Mohren, München; Wien: Hanser, 1999, ISBN 3-446-21258-2 beschrieben.

Spritzguss umfasst hier alle Spritzgießverfahren einschließlich Mehrkomponentenspritzguss und Spritzprägeverfahren.

Spritzprägeverfahren unterscheiden sich von herkömmlichen Spritzgussverfahren dadurch, dass der Einspritz- und/oder Verfestigungsvorgang unter Ausführung einer Formplattenbewegung durchgeführt wird. Beim bekannten Spritzprägeverfahren sind die Formplatten vor dem Einspritzvorgang bereits etwas geöffnet, um die bei der späteren Verfestigung auftretende Schwindung auszugleichen und den benötigten Spritzdruck zu reduzieren. Schon zu Beginn des Einspritzvorganges ist daher eine vorvergrößerte Kavität vorhanden. Tauchkanten des Werkzeuges garantieren auch bei etwas geöffneten Formplatten noch eine ausreichende Dichtigkeit der vorvergrößerten Kavität. Die Kunststoffmasse wird in diese vorvergrößerte Kavität eingespritzt und währenddessen bzw. anschließend unter Ausführung einer Werkzeugbewegung in Schließrichtung verpresst. Insbesondere bei der Herstellung von großflächigen und dünnwandigen Formteilen mit langen Fließwegen ist die aufwändigere Spritzprägetechnik bevorzugt oder ggf. zwingend erforderlich. Nur auf diese Weise wird eine Reduzierung der bei großen Formteilen benötigten Spritzdrücke erreicht. Ferner können Spannungen bzw. Verzug im Spritzgießteil, welche infolge hoher Spritzdrücke auftreten, durch Spritzprägen vermieden werden.

Die Abdeckung wird in die Fahrzeugkarosserie vorzugsweise über nicht IR-transparente Bereiche integriert. "Nicht IR-transparent" bedeutet hierbei eine Transmission im nicht IR-transparenten Bereich in seiner jeweiligen Dicke von weniger als 65 % im Bereich von 800 bis 1600 nm, insbesondere von 880 nm bis 950 nm und/oder 1520 bis 1570 nm, bestimmt nach DIN ISO 13468-2:2006. Dieses sind nicht-transparente Schichten, vorzugsweise aus einem Polymerblend, weiter bevorzugt aus einem Polycarbonatblend, bevorzugt mit Polycarbonat als überwiegend vorhandener Komponente, ganz besonders bevorzugt mit einem ABS (Acrylnitril-Butadien-Styrol) oder Polyester als Blendpartner. Eine solche nicht-transparente Schicht ist in weiten Bereichen in direktem Kontakt mit dem zuvor beschriebenen Schichtaufbau aus Substratschicht und ggf. vorhandener Schutzschicht.

Bei einer Anformung des nicht IR-transparenten Materials an die erfindungsgemäß eingesetzte Abdeckung liegt der Übergang der Materialien vorzugsweise in Kantenbereichen, so dass eventuell auftretende Unebenheiten kaschiert werden. In jedem Fall gibt es Bereiche, in denen die Substratschicht auf der nicht-IR-transparenten Schicht bzw. die nicht-IR-transparente Schicht auf der Substratschicht liegt. "Auf ... liegt" meint hierbei ein Überlappen der Schichten, wenn man die Abdeckung, senkrecht zur Verbindungsfläche der einzelnen Schichten, blickt. Es versteht sich, dass die nicht IR-transparente Schicht nicht in direktem Kontakt mit der Substratschicht sein muss, nur kann, da sie hinter weiteren Schichten angeordnet sein kann.

Diese nicht IR-transparenten Werkstoffe dienen insbesondere als verstärkende Rahmenelemente. Für die Herstellung von verstärkenden Rahmenelementen werden vorzugsweise thermoplastische Kunststoffe, enthaltend Füll- und/oder Verstärkungsstoffe, verwendet.

Die verwendeten Füll- und/oder Verstärkungsstoffe sind üblicherweise faser-, plättchen-, röhren-, stäbchen- oder kugelförmig bzw. sphärisch oder partikulär. Zu den geeigneten Füll- und Verstärkungsstoffen zählen beispielsweise Talk, Wollastonit, Glimmer, Kaolin, Kieselgur, Calciumsulfat, Calciumcarbonat, Bariumsulfat, Glasfasern, Glas- oder Keramikkugeln, Glashohlkugeln oder Keramikhohlkugeln, Glas- oder Mineralwolle, Kohlefasern oder Carbon-Nanotubes. Bevorzugte Füllstoffe sind Füllstoffe, die ein isotropes Schwindungsverhalten der Zusammensetzung bewirken.

Die Verwendung von Talk und Kurzglasfasern ist besonders bevorzugt.

Glas- oder Keramikkugeln oder -hohlkugeln können dabei die Kratzfestigkeit dieser Oberfläche erhöhen.

In Teilen der Substratschicht, die nicht vor dem LiDAR-Sensor angeordnet sind, d.h. diesen nicht zur Umwelt hin abdecken, kann die Substratschicht auch Materialien umfassen, welche Füll- und Verstärkungsstoffe enthalten. Deren Anteil beträgt bevorzugt 5 Gew.-% bis 40 Gew.-%, vorzugsweise 7 Gew.-% bis 30 Gew.-%, weiter bevorzugt 8 Gew.-% bis 25 Gew.-%, wobei sich die Gewichtsangaben auf die Gesamtzusammensetzung von der Substratschicht beziehen.

Die Abdeckungen, umfassend die bzw. aus den opaken Substratschichten - mit ggf. einer oder mehreren Primerschichten und einer oder mehreren Decklackschichten, können im Fahrzeugbau auf beliebige Trägersysteme aus Metall oder Kunststoff aufgebracht werden. Dies kann mittels spezieller Klebesysteme, wie z.B. Polyurethan-basierter Klebesysteme geschehen. Die Kombination aus LiDAR-Sensor und Abdeckung kann als Ganzes in einem Fahrzeug verbaut werden; ebenso können aber auch LiDAR-Sensor und Abdeckung separat verbaut werden. Bevorzugt wird zunächst der LiDAR-Sensor verbaut und dann die Abdeckung, insbesondere ein Frontpanel, nachträglich vor den LiDAR-Sensor gesetzt.

Im Rahmen der vorliegenden Erfindung können bevorzugte Ausführungsformen, die für einzelne Merkmale genannt sind, auch miteinander kombiniert werden, sofern diese nicht widersprüchlich sind.

### Figuren

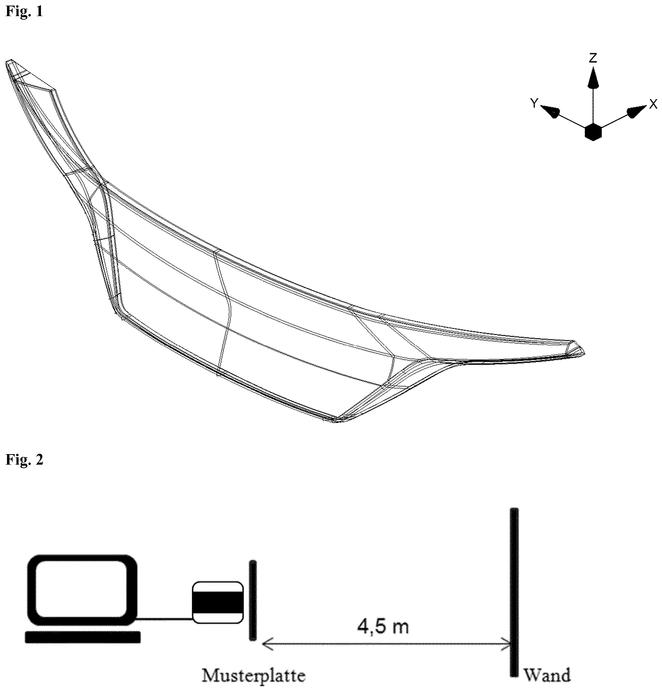

**Figur 1** zeigt ein Frontpanel als Beispiel für eine erfindungsgemäße Abdeckung.
**Figur 2** zeigt den im Beispielteil verwendeten Versuchsaufbau.

### Beispiele

Im Folgenden wird die Erfindung anhand von Ausführungsbeispielen näher beschrieben.

### Substratmaterial 1: für Vergleichsbeispiel

Zusammensetzung, enthaltend 99,99984 Gew.-% Polycarbonat der Firma Covestro Deutschland AG mit einer MVR von ca. 12 cm³/10 min, gemessen bei 300 °C und 1,2 kg Belastung (gemäß ISO 1133-1:2012-03), basierend auf Bisphenol A und terminiert mit Phenol. Die Zusammensetzung enthielt außerdem 0,00006 Gew.-% Macrolex Violett 3R (Farbmittel der Formel (12)) und 0,0001 Gew.-% Macrolex Blau RR (Farbmittel der Formel (7)).

### Substratmaterial 2: für Vergleichsbeispiel

Zusammensetzung, enthaltend 99,8 Gew.-% Polycarbonat der Firma Covestro Deutschland AG mit einer MVR von ca. 12 cm³/10 min, gemessen bei 300 °C und 1,2 kg Belastung (gemäß ISO 1133-1:2012-03), basierend auf Bisphenol A und terminiert mit Phenol. Die Zusammensetzung enthielt außerdem 0,1 Gew.-% Solvent Blue 36 (weiteres Farbmittel) und 0,1 Gew.-% Macrolex Grün G (Farbmittel der Formel (2)).

### Substratmaterial 3: für Vergleichsbeispiel

Zusammensetzung, enthaltend 99,8000 Gew.-% Polycarbonat der Firma Covestro Deutschland AG mit einer MVR von ca. 12 cm³/10 min, gemessen bei 300 °C und 1,2 kg Belastung (gemäß ISO 1133-1:2012-03), basierend auf Bisphenol A und terminiert mit Phenol. Das Polycarbonat enthielt 0,134 Gew.-% Solvent blue 36 (weiteres Farbmittel), 0,044 Gew.-% Macrolex Orange 3G (Farbmittel der Formel (17) und 0,022 Gew.-% Amaplast Yellow GHS (Solvent Yellow 163, Farbmittel der Formel (18)).

### Substratmaterial 4: für Vergleichsbeispiel

Zusammensetzung, enthaltend 99,84 Gew.-% Polycarbonat der Firma Covestro Deutschland AG mit einer MVR von ca. 12 cm³/(10 min), gemessen bei 300 °C und 1,2 kg Belastung (gemäß ISO 1133-1:2012-03), basierend auf Bisphenol A und terminiert mit Phenol. Das Material enthielt 0,16 Gew.-% Ruß.

### Substratmaterial 5: für Vergleichsbeispiel

Zusammensetzung, enthaltend 93,195850 Gew.-% Polycarbonat der Firma Covestro Deutschland AG mit einer MVR von ca. 18 cm³/(10 min), gemessen bei 300 °C und 1,2 kg Belastung (gemäß ISO 1133-1:2012-03), basierend auf Bisphenol A und terminiert mit tert-Butylphenol. Die Zusammensetzung enthielt außerdem 6,756 Gew.-% Kronos 2230 (Titandioxid), 0,00006 Gew.-% Macrolex Gelb 3G (Farbmittel der Formel (16)), 0,00009 % Macrolex Violett 3R (Farbmittel der Formel (12)) und 0,054 Gew.-% Tinopal (2,5-Thiophenyldibis(5-tert-butyl-1,3-benzoxazol); Optischer Aufheller).

### Substratmaterial 6: für Vergleichsbeispiel

Zusammensetzung, enthaltend 99,435 Gew.-% Polycarbonat der Firma Covestro Deutschland AG mit einer MVR von ca. 12 cm³/10 min, gemessen bei 300 °C und 1,2 kg Belastung (gemäß ISO 1133-1:2012-03), basierend auf Bisphenol A und terminiert mit Phenol. Das Polycarbonat enthielt 0,1 % Kronos 2230 (Titandioxid), 0,03 % Sicotan Gelb K2107 (Pigment Brown 24, CAS 68186-90-3; weiteres Farbmittel), 0,022 % Heucodur Blau 2R der Firma Heubach (Pigment Blue 28, Cobalt-Aluminat-Blau-Spinell, CAS 1345-16-0; weiteres Farbmittel), 0,35 % Macrolex Rot EG (Farbmittel der Formel (10) und 0,063 % Bayferrox 110 M der Firma Lanxess AG (Fe₂O₃; CAS 001309-37-1).

### Substratmaterial 7: für Vergleichsbeispiel

Polycarbonat/ABS-Blend der Firma Covestro Deutschland AG mit einem MVR von ca. 17 cm³/10 min, gemessen bei 260 °C und 5,0 kg Belastung (gemäß ISO 1133-1:2012-03), mit einem ABS-Anteil von ca. 30 Gew.-% und einem SAN-Gehalt von ca. 10 Gew.-%. Das Material enthielt keine Farbmittel.

### Substratmaterial 8: für Vergleichsbeispiel

Zusammensetzung, enthaltend 99,96 Gew.-% Polycarbonat der Firma Covestro Deutschland AG mit einer MVR von ca. 12 cm³/10 min, gemessen bei 300 °C und 1,2 kg Belastung (gemäß ISO 1133-1:2012-03), basierend auf Bisphenol A und terminiert mit Phenol. Die Zusammensetzung enthielt 0,04 Gew.-% Ruß.

### Substratmaterial 9: für Vergleichsbeispiel

Zusammensetzung, enthaltend 99,78 Gew.-% Polycarbonat der Firma Covestro Deutschland AG mit einer MVR von ca. 12 cm³/10 min, gemessen bei 300 °C und 1,2 kg Belastung (gemäß ISO 1133-1:2012-03), basierend auf Bisphenol A und terminiert mit Phenol. Die Zusammensetzung enthielt 0,02 Gew.-% Ruß und 0,2 Gew.-% Macrolex Violet B (Farbmittel der Formel (13)).

### Substratmaterial 10: für erfindungsgemäßes Beispiel

Zusammensetzung, enthaltend 99,874 Gew.-% Polycarbonat der Firma Covestro Deutschland AG mit einer MVR von ca. 18 cm³/(10 min), gemessen bei 300 °C und 1,2 kg Belastung (gemäß ISO 1133-1:2012-03), basierend auf Bisphenol A und terminiert mit tert-Butylphenol. Die Zusammensetzung enthielt außerdem 0,048 Gew.-% Macrolex Orange 3G (Farbmittel der Formel (17)), 0,01 Gew.-% Macrolex Violet B (Farbmittel der Formel (13)) und 0,068 Gew.-% Farbmittel der Formel (4a/4b, 1:1).

### Substratmaterial 11: für erfindungsgemäßes Beispiel

Zusammensetzung, enthaltend 99,8 Gew.-% Polycarbonat der Firma Covestro Deutschland AG mit einer MVR von ca. 12 cm³/10 min, gemessen bei 300 °C und 1,2 kg Belastung (gemäß ISO 1133-1:2012-03), basierend auf Bisphenol A und terminiert mit Phenol, und enthaltend 0,1 Gew.-% Macrolex Violet 3R (Farbmittel der Formel (12)) und 0,1 Gew.-% Macrolex Grün 5B (Farbmittel der Formel (1)).

### Substratmaterial 12: für erfindungsgemäßes Beispiel

Zusammensetzung enthaltend 99,894 Gew.-% Polycarbonat der Firma Covestro Deutschland AG mit einer MVR von ca. 12 cm³/10 min, gemessen bei 300 °C und 1,2 kg Belastung (gemäß ISO 1133-1:2012-03), basierend auf Bisphenol A und terminiert mit Phenol, und enthaltend 0,0360 Gew.-% Macrolex Blau RR (Farbmittel der Formel (7)) und 0,07 Gew.-% Macrolex Violet 3R (Farbmittel der Formel (12))

### Substratmaterial 13: für Vergleichsbeispiel

Spritzgegossene Farbmittel- und Ruß-freie Platte aus Polyamid 6,6 mit einer Stärke von 3,0 mm.

### Substratmaterial 14: für Vergleichsbeispiel

Polyethersulfon in Form einer 0,175 mm dicken Ajedium Folie der Firma Solvay Solexis Inc.

### Substratmaterial 15: für Vergleichsbeispiel

Siloxan-haltiges Blockcokondensat auf Basis von Bisphenol-A-haltigem Polycarbonat mit einem Siloxangehalt von 5 %, hergestellt wie in EP 3099731 A1 beschrieben.

### Substratmaterial 16: für Vergleichsbeispiel

Platte aus Polymethylmethacrylat der Marke Altuglass (Arkema).

### Prüfmethoden

### Feststoffgehaltsbestimmung (Methode A für Siloxanlacke und Primer):

Der Feststoffgehalt der Lacke wurde mit Hilfe des Feststofftesters Mettler Toledo HB43 bestimmt, wobei eine gewogene Lackprobe so lange bei 140°C eingedampft wurde, bis Massekonstanz erreicht wurde. Der Feststoffgehalt ergibt sich dann in Prozent aus dem Quotienten Masse nach zu Masse vor dem Eindampfen. Der Feststoffgehalt des Lackes nach Härten des Lackes beträgt hierbei im einfachsten Fall Lackgewicht abzüglich Lösungsmittelgewicht.

### Feststoffgehaltsbestimmung (Methode B für UV-Lacksysteme):

Der Feststoffgehalt der Lacke wurde mit Hilfe des Feststofftesters Mettler Toledo HB43 bestimmt, wobei eine gewogene Lackprobe so lange bei 110°C eingedampft wurde, bis Massekonstanz erreicht wurde. Der Feststoffgehalt ergibt sich dann in Prozent aus dem Quotienten Masse nach zu Masse vor dem Eindampfen. Der Feststoffgehalt des Lackes nach Härten des Lackes beträgt hierbei im einfachsten Fall Lackgewicht abzüglich Lösungsmittelgewicht.

### Mehrschichtkörper 1: Vergleichsbeispiel

Mehrschichtkörper 1 aus Substratmaterial 11 mit einer Decklackschicht mit Siliciumdioxid-Partikeln mit einer Partikelgröße von 4 µm (Amosil FW600; Gebranntes Siliciumdioxid Amosil FW 600 der Quarzwerke GmbH in Frechen mit einer mittleren Partikelgröße von ca. 4 µm, einem D₁₀/D₉₀-Verhältnis von ca. 1,5/10 [µm/µm] bestimmt nach Cilas Granulometer; ISO 13320:2009 (Partikelmessung nach Laserlichtbeugung) sowie einer spezifischen Oberfläche von ca. 6 m²/g, ermittelt nach DIN ISO 9277 (DIN-ISO 9277:2014-01).

### Herstellung des Lackes:

In einem Kolben, ausgestattet mit einem Rührer und Kühler, wurden 27,5 g Methyltrimethoxysilan mit 0,2 g konzentrierter Essigsäure gemischt.

In einem weiteren Gefäß wurden 5,0 g Joncryl 587 in einer Mischung aus jeweils 6,0 g Isopropanol und n-Butanol gelöst. Mittels Dissolver wurden 6,8 g Amosil FW 600 unter hoher Scherung 30 Minuten dispergiert, anschließend wurde 15,7 g deionisiertes Wasser zugegeben.

Unter Rühren wurde die zuvor hergestellte Joncyrl 587 / Amosil FW 600-Dispersion langsam zu dem angesäuerten Methyltrimethoxysilan gegeben.

Der Ansatz wurde mit jeweils 15,5 g Isopropanol und n-Butanol verdünnt und mit 0,1 g Tetra-n-Butylammoniumacetat (TBAA) versetzt.

Der Festkörper des Sol-Gel Lackes wurde mit einer 1:1-Lösemittelmischung aus Isopropanol und n-Butanol auf einen Feststoffgehalt, gemessen nach Methode A für Siloxanlacke und Primer, von 25% eingestellt.

| | |
|---|---|
| Festkörper: | 25% |
| pH-Wert: | 6,0 |

Die Applikation der Decklackschicht wurde per Hand mittels Flutverfahren durchgeführt. Der Lack wurde zur Ausbildung der Schutzschicht ausgehend von der oberen Kante einer Polycarbonat-Platte aus Substrat 11 der Abmessungen 250 mmx 105 mm x 3,2 mm in Längsrichtung über die Platte gegossen, während gleichzeitig der Ansatzpunkt des Lackes auf der Platte von links nach rechts über die Plattenbreite geführt wurde.

Die lackierte Platte wurde senkrecht an einer Klammer hängend nach einer Ablüftzeit von 30 Minuten bei 23°C und anschließend 60 Minuten bei 130°C gehärtet.

### Mehrschichtkörper 2: Vergleichsbeispiel

Mehrschichtkörper aus Substratmaterial 11 mit einer Decklackschicht mit Siliciumdioxid-Partikeln mit einer Partikelgröße D₉₀ von 1,2 µm (Amosil FW960-943 der Quarzwerke GmbH in Frechen; mittlere Korngröße 1,2 µm sowie einer spezifischen Oberfläche von ca. 14 m²/g, ermittelt nach DIN ISO 9277 (DIN-ISO 9277:2014-01).

Herstellung des Lacks: Die Herstellung des Lacks erfolgte wie bei Mehrschichtkörper 1, wobei bei vorliegenden Beispiel jedoch Amosil FW 960-943 verwendet wurde.

Der Festkörper des Sol-Gel Lackes wurde mit einer 1:1-Lösemittelmischung aus Isopropanol und n-Butanol auf einen Feststoffgehalt gemessen nach Methode A für Siloxanlacke und Primer von 25% eingestellt.

| | |
|---|---|
| Festkörper: | 25% |
| pH-Wert: | 5,5 |

Die Applikation des Lackes wurde wie bei Mehrschichtkörper 1 auf einer Polycarbonat-Platte aus Substrat 11 der Abmessungen 250 x 105 x 3,2 mm durchgeführt.

### Mehrschichtkörper 3: erfindungsgemäßes Beispiel

Mehrschichtkörper aus Substratmaterial 11 mit einer Decklackschicht mit Siliciumdioxid-Partikeln mit einer Partikelgröße von ca. 22 nm (Ludox AS-40 Silica, kolloid, spezifische Oberfläche 140 m²/g; W.R. Grace&Co.-Conn. Maryland 21044 USA).

### Herstellung des Lackes:

In einem Kolben, ausgestattet mit einem Rühren und Kühler, wurden 27,5 g Methyltrimethoxysilan mit 0,2 g konzentrierter Essigsäure gemischt.

In einem weiteren Gefäß wurden 17 g Ludox AS-40 (Silika-Sol der Firma Grace) mit 5,5 g deionisiertem Wasser gemischt.

Unter Rühren wurde das verdünnte Silika-Sol zum angesäuerten Methyltrimethoxysilan gegeben und 4 Stunden bei Raumtemperatur nachgerührt. Nach den 4 Stunden wurden nochmals 1,7 g konzentrierte Essigsäure zugegeben. Um die Hydrolyse-Kondensationsreaktion zu bewirken wurden weitere 3 Stunden bei Raumtemperatur gerührt.

Zu der Mischung wurde unter Rühren bei Raumtemperatur jeweils 21,5 g Isopropanol und n-Butanol und 0,1 g Tetra-n-Butylammoniumacetat (TBAA) zugesetzt. Im Anschluss wurden 5,0 g Joncryl 587 in der Mischung gelöst.

Der Festkörper des Sol-Gel Lackes wurde mit einer 1:1-Lösemittelmischung aus Isopropanol und n-Butanol auf einen Feststoffgehalt gemessen nach Methode A für Siloxanlacke und Primer von 25% eingestellt.

| | |
|---|---|
| Festkörper: | 25% |
| pH-Wert: | 5,0 |

Die Applikation des Lackes wurde wie bei Mehrschichtkörper 1 auf einer Polycarbonat-Platte aus Substrat 11 der Abmessungen 250 mm x 105 mm x 3,2 mm durchgeführt.

### Mehrschichtkörper 4: erfindungsgemäßes Beispiel

Eingesetzt wurde eine kommerziell erhältliche Primerlösung mit einem Feststoffgehalt von 10,5 % (Methode A). Dieser Primer basiert auf Polymethylmethacrylat, sowie Glykolether und enthält 1-Methoxy-2-propanol und Diacetonalkohol als Lösemittel und Dibenzoylresorcin als UV-Absorber.

Um innerhalb der Schichtdickenspezifikation des Herstellers zu liegen, muss dieser Lack mit einem Lösungsmittelgemisch Diacetonalkohol : 1-Methoxy-2-propanol (1:1) verdünnt werden. Hierzu wurde zu dem oben beschriebenen Primer eine Lösung von Tinuvin 479 (ein Hydroxyphenyltriazin-UV-Absorber) in Methoxy-2-propanol/Diacetonalkohol (1:1), so dass eine Primerlösung enthaltend 5,00 Gew.-% Tinuvin 479 und ein Feststoffgehalt von 5,9 % erhalten wurde. Anschließend wurde der Lack über eine Drucknutsche filtriert (2-4 µm Cellulosefilter).

### Herstellen der Hardcoatlösung (für die Decklackschicht):

Es wurde eine Decklackschichtlösung enthaltend Ludox AS Partikel mit einem Partikeldurchmesser von ca. 22 nm verwendet. Der Feststoffgehalt betrug ca. 20 Gew.-% und der UV-Absorbergehalt betrug ca. 11 Gew.-%. Als UV-Absorber wurde ein UV-Absorber der Struktur (III) verwendet (mit n = 3). Die Herstellungsmethode der Decklackschichtlösung ist in US 5,041,313 A beschrieben.

Zu 24,5 g dieser Lösung wurden unter Rühren 0,88 g Eisessig (100% Essigsäure) zugegeben, so dass eine Hardcoatlösung mit 3,5 Gew.-% Essigsäurezusatz, bezogen auf die Gesamtlackmenge, erhalten wurde.

Die Applikation wurde per Hand durchgeführt. Hierbei wurde die flüssige Primerlösung zur Ausbildung der Schichten ausgehend von der oberen Kante des Kleinteiles in Längsrichtung über die eine Polycarbonat-Platte aus Substrat 11 der Abmessungen 250 mm x 105 mm x 3,2 mm gegossen, während gleichzeitig der Ansatzpunkt des Lackes auf der Platte von links nach rechts über die Plattenbreite geführt wurde. Die lackierten Platten wurden senkrecht an einer Klammer hängend nach einer Ablüftzeit von 30 Minuten bei 23°C und anschließend 60 Minuten bei 130°C gehärtet. Im Anschluss an das Aufbringen der Primerschicht wurde in analoger Weise der Decklack (die Kratzfestschicht) als Decklackschicht aufgebracht und nach 30-minütiger Ablüftzeit bei 23°C 60 Minuten bei 130°C gehärtet.

### Mehrschichtkörper 5: Erfindungsgemäß

Mehrschichtkörper 5 entspricht Mehrschichtkörper 4 nur in der unten angegebenen Substratschichtdicke von 4 mm statt 3,2 mm.

Die Herstellung und Applikation des Primers und Decklacks erfolgte wie bei Mehrschichtkörper 4 beschrieben.

### Mehrschichtkörper 6: Erfindungsgemäß

Mehrschichtkörper aus Substratmaterial 11 entspricht Mehrschichtkörper 3 nur mit veränderter Substratschichtdicke (4 mm) statt 3,2 mm. Die Herstellung des Lackes und die Applikation erfolgte wie im Beispiel Mehrschichtkörper 3 beschrieben

### Mehrschichtkörper 7: Vergleichsbeispiel

Mehrschichtkörper aus Substratmaterial 11 und einem UV-härtendem Urethanacrylat-Lacksystem.

Es wurde eine Beschichtungslösung bestehend aus 100 g Desmolux VP LS2308 (ALLNEX, ungesättiges aliphatisches Urethanacrylat), 61,0 g Ebecryl 8301 (Cytec, hexafunktionales aliphatisches Urethanacrylat), 4,86 g Irgacure 814 (BASF), 1,62 g BYK 306 (BYK), 3,78 g Hostavin 3206 LIQ ( Clariant),1,70 g Hostavin^{®} 3058 LIQ ( Clariant), 160 g Methoxypropanol und 160 g Diacetonalkohol einseitig im Flutverfahren auf Platten aus Substrat 11 der Größe 10,5 cm x 15 cm x 0,4 cm aufgebracht.

Die Beschichtung erfolgte per Hand. Hierbei wurde die Beschichtungslösung ausgehend von der oberen Kante des Kleinteiles in Längsrichtung über die Platte gegossen, während gleichzeitig der Ansatzpunkt des Primers auf der Platte von links nach rechts über die Plattenbreite geführt wurde. Nach einer Abdunstzeit von 5 min wurde die Platte 6 min bei 75°C vorgehärtet. Anschließend erfolgte die UV-Härtung mit einer Dosis von ~ 7 - 8 J/cm² unter Einsatz einer Quecksilber-dotierten UV-Lampe (80 W/cm).

### Compoundierung

Die Compoundierung der Komponenten zu den Zusammensetzungen für die Substratschichten erfolgte auf einem Zweiwellenextruder der Firma KraussMaffei Berstorff, TYP ZE25, bei einer Gehäusetemperatur von 260°C, beziehungsweise einer Massetemperatur von ca. 280°C und einer Drehzahl von 100 Upm mit den in den Beispielen angegebenen Mengen an Komponenten. Die Farb-Zusammensetzungen wurden zu 5 mm, 4 mm bzw. 3,2 mm dicken spritzgegossenen, rechteckigen Polycarbonatplatten verarbeitet.

### Vorbehandlung/Reinigung der Platten vor der Beschichtung

Die Beschichtung erfolgte in einem klimakontrollierten Beschichtungsraum unter den jeweiligen Vorgaben des Lackherstellers bei 23 bis 25°C und 40 bis 48% rel. Feuchte.

Die Musterplatten wurden mit sogenannten Iso-Tüchern (LymSat^{®} der Firma LymTech Scientific; gesättigt mit 70% Isopropanol und 30% deionisiertem Wasser) gereinigt, mit Isopropanol abgespült, 30 min an Luft getrocknet und mit ionisierter Luft abgeblasen.

### Eingesetzter LiDAR-Sensor

Es wurde ein LiDAR-Sensor der Firma Velodyne, Ty Puck VLP 16 eingesetzt. Dieser arbeitet im Wellenlängenbereich von 895 bis 915 nm (Toleranzbereich). Die Nennwellenlänge, d.h. eigentliche Arbeitswellenlänge, der 16 Laser liegt bei 903 nm.

Die wesentlichen Eigenschaften dieses Sensors sind:
Erfassungswinkel vertikal -15° bis + 15° mit 2°-Abstand zwischen den Scanebenen und horizontal 360°. Die Software beinhaltet eine Multi-Beam-Funktion mit 16 Beams zur Minimierung von Schatteneffekten. Horizontale Auflösung des Lasersystems liegt bei 0,1° bis 0,4°, abhängig von der Rotationsgeschwindigkeit. Die Rotationsgeschwindigkeit der Vertikalerfassung ist einstellbar zwischen 5 bis 20 Hz. Bei einer Datenrate von 2Mbyte / sec werden 300 000 Punkte / Sekunde erfasst. Die erzielte Messgenauigkeit liegt dabei bei ca. +/- 3cm, dies entspricht 1 Sigma. Die erfassbare Messdistanz liegt zwischen 1 mm bis 100 Meter. Der Energiebedarf des Sensorsystems liegt bei 8 Watt elektrische Leistung, entsprechend 0,7A bei 12 Volt. Die Gesamtabmessungen des Sensors sind: Durchmesser 100 mm und Höhe 65 mm.

### Messverfahren

Zur Reduktion der Streulichtsignale wurde der Sensorkopf des LiDAR-Sensors auf der messwegabgewandten Seite abgeschirmt. Es wurden nur Laser 1, 3, 5, 7, 8, 10, 12, 14 verwendet. Außerdem wurde das Field-Of-View (FOV) des Sensors im Sensor-Interface auf 20° (350°-10°) begrenzt. Als Reflexionsfläche diente eine glatte, mit TiO₂-haltiger Farbe gestrichene weiße Fläche. Die Wand befand sich 2,5 m vom LiDAR-Sensor entfernt.

Die Prüfmuster wurden mittels eines Probenhalters parallel zum LiDAR-Sensor getestet, wobei die Probenrückseite ca.15 mm vor dem LiDAR-Sensor lag, sodass sowohl das Ausgangssignal als auch das zurückgeworfene Eingangssignal durch die Wanddicke der Prüfplatte dringen musste. Die Auswertung wurde mit der Software "VeloView" vom Hersteller des LiDAR-Sensors Velodyne durchgeführt. Es wurde der Mittelwert der gemessenen Intensitäten einer Probe bestimmt. Dieser Proben-Mittelwert wurde durch den Mittelwert der Referenzmessung (Luft) geteilt, um so die relative Intensität zu bestimmen.

Die gemessenen Intensitäten des wieder aufgenommenen Lasersignals lagen zwischen 0% und 100%. Je geringer die Dämpfung (Abschwächung) des Signals ist, also umso höher die Intensität des gemessenen Signals ist, desto geeigneter wird die Abdeckung für LiDAR-gestützte Sensoranwendungen im Automobilbereich eingestuft. Die Transmission der jeweiligen Platte für IR-Strahlung im Bereich von 800 bis 1600 nm wurde bestimmt gemäß DIN ISO 13468-2:2006. Die Lichttransmission im VIS-Bereich des Spektrums (380 bis 780 nm, Transmissionsgrad Ty) wurde bestimmt nach DIN ISO 13468-2:2006 (D65, 10°, Schichtdicke der Musterplatte: 4 mm). Die Transmissionsmessungen wurden an einem Lambda 950 Spektralphotometer der Firma Perkin Elmer mit Photometerkugel durchgeführt.

### Abriebsprüfung:

Der Abriebsprüfung erfolgte als Waschstraßentest nach DIN ISO 15082:2017-06.

Es wurden 10 Doppelwaschungen mit einer gerührten Suspension von Quarzmehl in Wasser (1,5 g Quarzmehl pro Liter Wasser) durchgeführt.

### MVR:

Die Bestimmung der Schmelze-Volumenfließrate (MVR) erfolgte nach ISO 1133:2012-03 (bei einer Prüftemperatur von 300 °C, Masse 1,2 kg) mit dem Gerät Zwick 4106 der Firma Zwick Roell. Zusätzlich wurde die MVR nach 5, 20 und 30 Minuten Vorwärmzeit gemessen. Dies ist ein Maß für die Schmelzestabilität unter erhöhtem thermischem Stress.

### Ergebnisse

**Tabelle 1: Messergebnisse zur Lichttransmission Ty (D65, 10°) (VIS) und LiDAR-Sensor-Eignung der Substratschichten**

| **Beispiele** | **Substratmaterial** | **Farbmittel und sonstige Komponenten** | **Gesamtkonzentration Farbmittel [Gew.-%]** | **Ty [%]** | **Dicke [mm]** | **Intensität des Laser-Signals nach Durchgang durch das Substrat [%]** |
|---|---|---|---|---|---|---|
| | | | | | | |
| **1** Vergleichsbeispiel | 1 | (7); (12) | 0,00016 | 88,1 | 5 | 70,8 |
| **2** Vergleichsbeispiel | 2 | (2); weiteres Farbmittel | 0,2 | 0 | 2 | 24,9 |
| **3** Vergleichsbeispiel | 3 | (17), (18); weiteres Farbmittel | 0,199 | 0 | 2 | 24,3 |
| **4** Vergleichsbeispiel | 4 | Ruß | 0,16 | 0 | 5 | 0 |
| **5** Vergleichsbeispiel | 5 | (16); (12); TiO₂ | 0,00015 | 0 | 3,2 | 0 |
| **6** Vergleichsbeispiel | 6 | Titandioxid; (10); weitere Farbmittel; Eisen(III)oxid | 0,465 | 0 | 3,2 | 0 |
| **7** Vergleichsbeispiel | 7 | | 0 | 23,8 | 3,2 | 0 |
| **8** Vergleichsbeispiel | 8 | Ruß | 0,04 | 0 | 2,0 | 0 |
| **9** Vergleichsbeispiel | 9 | Ruß; (13) | 0,2 | 0 | 2,0 | 0 |
| **10** erfindungsgemäß | 10 | (4a/4b); (13); (17) | 0,126 | 0 | 2,0 | 71,7 |
| **11** erfindungsgemäß | 11 | (12); (1) | 0,2 | 0 | 4,0 | 69,6 |
| **12** erfindungsgemäß | 12 | (7); (12) | 0,106 | 0,7 | 2,0 | 76,7 |
| **13** Vergleichsbeispiel | 13 | - | - | 46 | 3,0 | 0 |
| **14** Vergleichsbeispiel | 14 | - | - | 87 | 0,175 | 2,9 |
| **15** Vergleichsbeispiel | 15 | - | - | 23 | 2,3 | 0 |
| **16** Vergleichsbeispiel | 16 | - | - | 92,5 | 2,7 | 73,4 |

Wie aus Tabelle 1 ersichtlich, sind nur bestimmte Substratmaterialien geeignet. Schon sehr dünne Schichtdicken ungeeigneter Materialien, beispielsweise aus Polypropylen, dämpfen das Sensorsignal so stark, dass im Messaufbau keine Intensität mehr zu messen war. Ebenso war überraschend, dass so unterschiedliche Substrate wie Polyamid (Bsp. 16) und ABS (Bsp. 17) im Messaufbau keine Durchlässigkeit für den LiDAR-Sensor zeigten. Alle diese Thermoplaste sind in relevanten Schichtdicken im IR-Bereich transparent oder zumindest teiltransparent. Überraschenderweise weisen auch völlig amorphe Polymere wie Polyethersulfon und Polyester eine hohe Dämpfung für den LiDAR-Sensor auf.

Selbst modifizierte Polycarbonate wie Siloxan-haltige Polycarbonate sind nicht in geeigneter Weise mit einem LiDAR-Sensor kombinierbar.

Weiterhin war es völlig überraschend, dass auch Kombinationen von in einer Polycarbonatmatrix löslichen Farbmitteln teilweise zu hohen Dämpfungen des LiDAR-Signals führten (Beispiel 2 und 3). Demgegenüber ist die erfinderische Kombination an Farbmitteln in der thermoplastischen Matrix von auf Bisphenol A basierendem Polycarbonat in geeigneter Weise mit einem LiDAR-Sensor verknüpfbar.

Es wurde zudem die Schmelzevolumenfließrate einiger Zusammensetzungen nach ISO 1133-1:2011 bei 300 °C bzw. 320°C und 1,2 kg Belastung über ein gewisses Zeitintervall bestimmt (Tabelle 2). Hieraus ist zu erkennen, dass die Substratmaterialien 2 und 3 der Vergleichsbeispiele deutlich instabiler sind das erfindungsgemäße Substratmaterial 11.

**Tabelle 2: MVR für die Substratmaterialien 2, 3 und 11**

| | **Substratmaterial 2 [cm³/(10 min)]** | **Substratmaterial 3 [cm³/(10 min)]** | **Substratmaterial 11 [cm³/(10 min)]** |
|---|---|---|---|
| **300°C** | | | |
| nach 5 min | 12,0 | 12,3 | 12,5 |
| nach 20 min | 12,5 | 13,7 | 13,2 |
| nach 30 min | 13,0 | 15,0 | 13,3 |

| **320°C** | | | |
|---|---|---|---|
| nach 5 min | 21,5 | 22,3 | 21,9 |
| nach 20 min | 24,8 | 30,1 | 23,0 |
| nach 30 min | 26,5 | 34,7 | 23,5 |

**Tabelle 3: Messergebnisse zur LiDAR-Sensor-Eignung der Schutzschichten**

| **Mehrschichtkörper Beispiel** | **Substratmaterial** | **Dicke Mehrschichtkörper [mm]** | **Teilchengröße D₉₀ im Lacksystem** | **Intensität nach Durchgang durch das Substrat** |
|---|---|---|---|---|
| **1** | 11 | 3,2 | 4 µm | 24,6 % |
| **2** | 11 | 3,2 | 1,2 µm | 36,8 % |
| **3** | 11 | 3,2 | 22 nm | 67,1 % |
| **4** | 11 | 3,2 | 22 nm | 74,2 % |

Die Ergebnisse wurden rechnerisch ausgewertet.

**Tabelle 4: Transmissionen der Mehrschichtkörper im IR-Bereich**

| **Mehrschichtkörper Beispiel** | **Dicke Mehrschichtkörper [mm]*** | **Direkte Transmission 905 nm** | **Totale Transmission bei 905 nm** | **Direkte Transmission bei 1550 nm** | **Totale Transmission bei 1550 nm** |
|---|---|---|---|---|---|
| **1** | 3,2 | 74,5 % | 88,1 % | 82,0 % | 87,2 % |
| **2** | 3,2 | 82,5 % | 88,4 % | 84,4 % | 87,9 % |
| **3** | 3,2 | 87,1 % | 89,8 % | 86,6 % | 88,4 % |
| **4** | 3,2 | 91,2 % | 92,0 % | 90,2 % | 91,0 % |

| | | | | | |
|---|---|---|---|---|---|
| *entspricht i.W. der Dicke der Substratschicht | | | | | |

Für die Versuche an Mehrschichtkörpern wurde ein Substratmaterial gewählt, welches im Test eine hohe Durchlässigkeit für das LiDAR-Signal zeigte. Es wurden verschiedene Mehrschichtkörper getestet und untersucht, welche Kombinationen eine gute Durchlässigkeit zeigten. Es konnte gezeigt werden, dass vor allem die Partikelgröße der Partikel, die zur Erzielung einer guten Kratzfestigkeit eingesetzt werden, einen Einfluss auf die Dämpfung des LiDAR-Signals hat. Eine hohe Kratzfestigkeit ist wichtig, um Witterungseinflüsse zu reduzieren. Es konnte gezeigt werden, dass nur bestimmte Partikelgrößen in Kombination mit geeigneten Substratmaterialien für LiDAR-Sensoren geeignet sind.

**Tabelle 5: Dämpfung des LiDAR-Signals vor der Abriebsprüfung**

| **Mehrschichtkörper Beispiel** | **Substratmaterial** | **Dicke Mehrschichtkörper [mm]** | **Intensität nach Durchgang durch das Substrat** |
|---|---|---|---|
| | | | [%] |
| **5 erf.** | 11 | 4 | 74,2 |
| **6 erf.** | 11 | 4 | 69,6 |
| **7 Vergl.** | 11 | 4 | 68,7 |

**Tabelle 6: Dämpfung des LiDAR-Signals nach der Abriebsprüfung**

| **Rechnerische Auswertung: Mehrschichtkörper Beispiel** | **Substratmaterial** | **Dicke Mehrschichtkörper [mm]** | **Intensität nach Durchgang durch das Substrat** | **Delta** |
|---|---|---|---|---|
| **5 erf.** | 11 | 4 | 73,4 % | 0,8 |
| **6 erf.** | 11 | 4 | 68,7 % | 0,9 |
| **7 Vergl.** | 11 | 4 | 47,7 % | 22,5 |

Erfindungsgemäße Mehrschichtkörper weisen nach der Abriebsprüfung noch ein Mindestsignal von 65 % auf.

**Tabelle 7: Transmissionen der Mehrschichtkörper im IR-Bereich**

| **Beispiel** | **Dicke Mehrschichtkörper [mm]** | **Direkte Transmission bei 905 nm** | **Totale Transmission bei 905 nm** | **Direkte Transmission bei 1550 nm** | **Totale Transmission bei 1550 nm** |
|---|---|---|---|---|---|
| **5** | 4 | 89,1 % (91,2 %) | 92,0 % (92,0 %) | 88,8 % (90,2 %) | 90,3 % (91,0 %) |
| **6** | 4 | 88,8 % (91,1 %) | 91,4 % (91,9 %) | 87,8 % (88,8 %) | 89,7 % (89,6 %) |
| **7** | 4 | 79,5 % (88,8 %) | 89,2 % (89,7 %) | 83,2 % (87,5 %) | 88,0 % (88,4 %) |

| | | | | | |
|---|---|---|---|---|---|
| * Die Werte in Klammern geben die Ergebnisse vor dem Waschstraßentest an. | | | | | |

Völlig überraschend zeigt sich, dass ein organisches Lacksystem, insbesondere auch eines ohne Nanopartikel, nach dem Waschstraßentest nach DIN ISO 15082:2017-06 eine größere Dämpfung für den LiDAR-Sensor aufweist.

## Patentansprüche

1. Sensor-System, umfassend
a) einen LiDAR-Sensor, der Laserlicht mit einer Wellenlänge im Bereich von 800 bis 1600 nm aussendet, und
b) eine den LiDAR-Sensor teilweise oder ganz umgebende Abdeckung, die dazu vorgesehen ist, von dem Laserlicht durchstrahlt zu werden, umfassend einen Mehrschichtkörper, umfassend in dieser Reihenfolge
i) eine Substratschicht, umfassend eine thermoplastische Zusammensetzung auf Basis von aromatischem Polycarbonat mit einer Schmelzvolumenrate MVR von 8 bis 20 cm³/(10 min), bestimmt nach ISO 1133-1:2012-03 (300°C, 1,2 kg),
wobei die Zusammensetzung eine Lichttransmission im Bereich von 380 bis 780 nm von weniger als 25,0 %, bestimmt bei einer Schichtdicke von 4 mm nach DIN ISO 13468-2:2006 (D65, 10°), aufweist
und wobei die Substratschicht in ihrer jeweiligen Dicke eine Transmission für IR-Strahlung im Bereich von 800 nm bis 1600 nm von mindestens 40 %, bestimmt nach DIN ISO 13468-2:2006, aufweist, und
ii) optional eine Primerschicht auf Basis von Polymethylmethacrylat und enthaltend mindestens einen UV-Absorber,
iii) eine Decklackschicht auf Polysiloxanbasis, enthaltend eine Kombination eines organomodifizierten Silans mit einem Kiesel-Sol, wobei die Decklackschicht Siliciumdioxid-Partikel mit einem D₉₀, bestimmt mittels Rastertransmissionselektronenmikroskopie, von weniger als 0,50 µm und keine weiteren Partikel mit einem D₉₀, bestimmt mittels Rastertransmissionselektronenmikroskopie, ≥ 0,50 µm enthält,
wobei die Decklackschicht auf der Seite der Substratschicht ist, die der Seite der Substratschicht, auf welcher der LiDAR-Sensor angeordnet ist, gegenüberliegt.

2. Sensor-System nach Anspruch 1, wobei die Decklackschicht mindestens einen UV-Absorber aus der Gruppe der Benzophenone, Resorcine, 2-(2-Hydroxyphenyl-)Bentriazole, Hydroxyphenyl-s-Triazine, 2-Cyanacrylate und/oder Oxalanilide enthält.

3. Sensor-System nach Anspruch 1 oder 2, wobei das organo-modifizerte Silan mindestens ein Methyltrialkoxysilan, ein Dimethyldialkoxysilan oder deren Mischung ist.

4. Sensor-System nach einem der vorhergehenden Ansprüche, wobei der Mehrschichtkörper eine oder mehrere Primerschichten mit einer Dicke von jeweils 0,3 µm bis 8 µm, enthaltend mindestens einen UV-Absorber aus der Gruppe der Benzophenone, der Resorcine, 2-(2-Hydroxyphenyl-)Bentriazole, Hydroxyphenyl-s-Triazine, 2-Cyanacrylate, Oxalanilide und/oder sterisch gehinderten Amine (HALS), umfasst.

5. Sensor-System nach einem der vorhergehenden Ansprüche, wobei die Abdeckung neben der Substratschicht i, einer oder mehreren Decklackschichten iii und optional einer oder mehreren Primerschichten ii keine weiteren Schichten umfasst.

6. Sensor-System nach einem der vorhergehenden Ansprüche, wobei zwischen dem LiDAR-Sensor und der Abdeckung nur Luft oder ein die Funktionsfähigkeit des LiDAR-Sensors nicht beeinträchtigendes Element liegt.

7. Sensor-System nach einem der vorhergehenden Ansprüche, wobei die Decklackschicht neben den Siliciumdioxidpartikeln keine weiteren Partikel enthält.

8. Sensor-System nach einem der vorhergehenden Ansprüche, wobei der D₉₀ der Siliciumdioxidpartikel, bestimmt mittels Rastertransmissionselektronenmikroskopie, weniger als 50 nm beträgt.

9. Sensor-System nach einem der vorhergehenden Ansprüche, wobei der Mehrschichtkörper auf beiden Seiten der Substratschicht eine Decklackschicht iii) und jeweils optional eine Primerschicht ii) aufweist.

10. Sensor-System nach einem der vorhergehenden Ansprüche, wobei die Abdeckung ein Frontpanel, ein Heckpanel, ein Stoßfänger, ein Kühlergrill, ein Fahrzeugdach, ein Fahrzeugdachmodul oder ein Fahrzeugseitenteil ist.

11. Sensor-System nach einem der vorhergehenden Ansprüche, wobei die thermoplastische Zusammensetzung der Substratschicht folgende Komponenten enthält:
i) mindestens 70 Gew.-% aromatisches Polycarbonat,
ii) mindestens ein grünes und/oder ein blaues Farbmittel und
iii) mindestens ein rotes und/oder violettes Farbmittel,
iv) optional weitere Farbmittel,
wobei die Summe der Farbmittel ii) bis iv) mindestens 0,05 Gew.-% beträgt, und
das mindestens eine Farbmittel der Gruppe ii) ein Farbmittel, ausgewählt aus der Gruppe, bestehend aus den Farbmitteln der Formeln (1), (2a-c), (3), (4a), (4b), (5), (6), (7) und/oder (8), ist 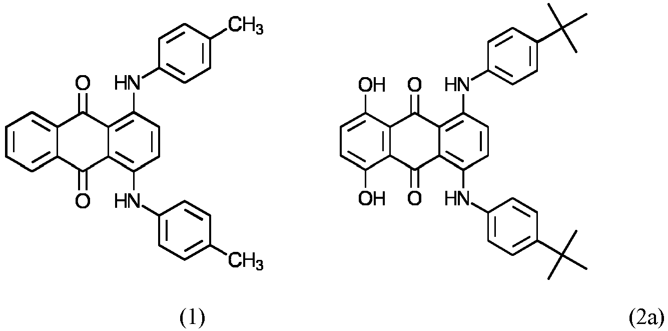 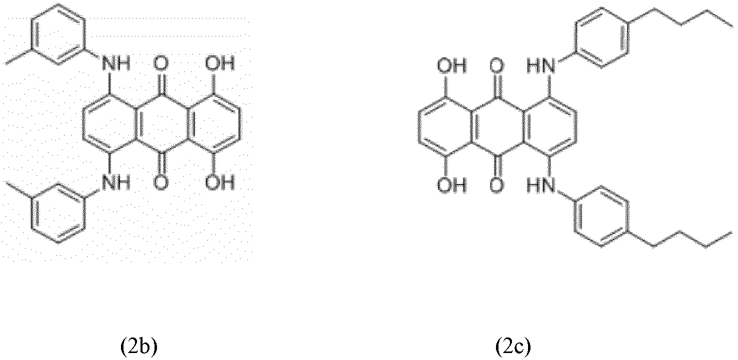 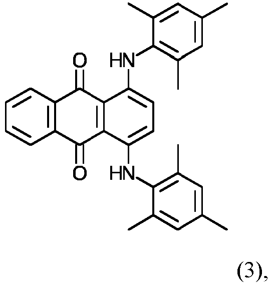 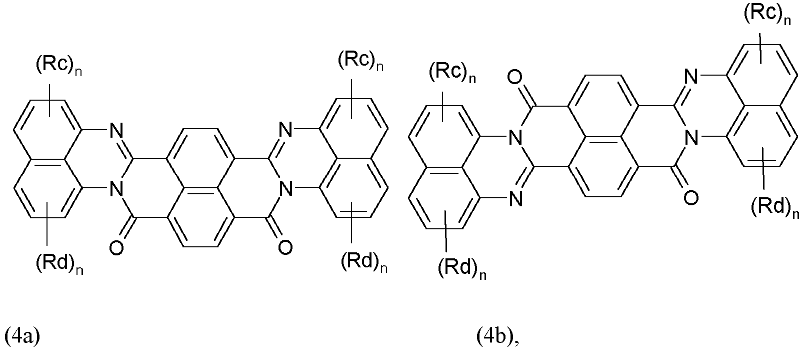
wobei
Rc und Rd unabhängig voneinander für einen linearen oder verzweigten Alkylrest oder Halogen stehen,
n unabhängig vom jeweiligen R für eine natürliche Zahl zwischen 0 und 3 steht, 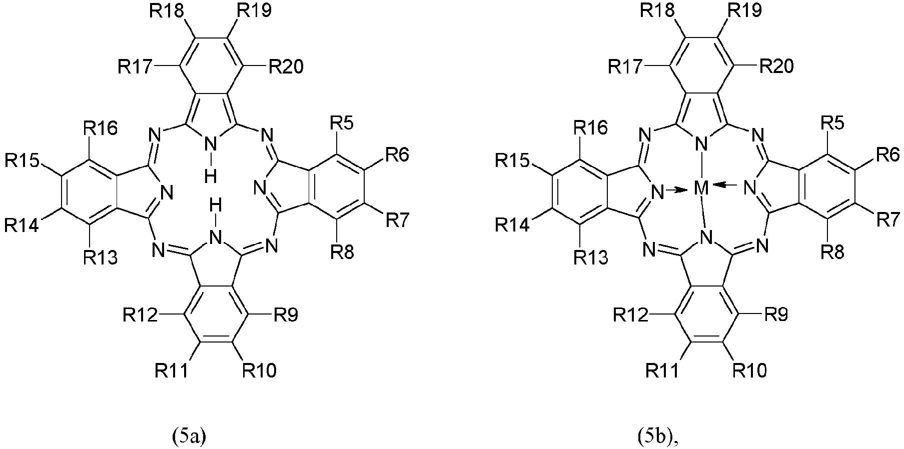
wobei die Reste R(5-20) unabhängig voneinander für Wasserstoff, Methyl, Ethyl, Propyl, Isopropyl, Butyl, Isobutyl, tert.-Butyl, Pentyl, Neopentyl, Hexyl, Thexyl, Fluor, Chlor, Brom, Sulfon, CN stehen und M Aluminium, Nickel, Cobalt, Eisen, Zink, Kupfer oder Mangan ist, 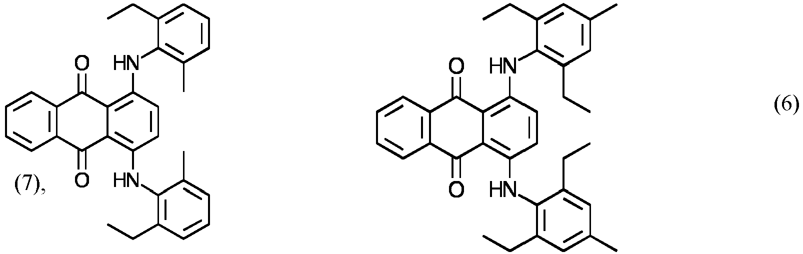 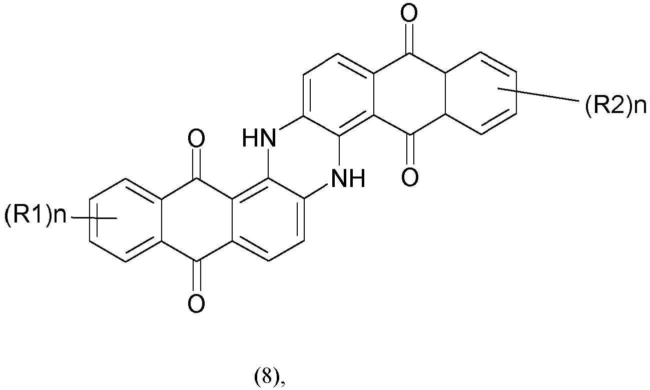 wobei
R1 und R2 unabhängig voneinander für einen linearen oder verzweigten Alkylrest oder Halogen stehen,
n für eine natürliche Zahl zwischen 0 und 4 steht,
und das mindestens eine Farbmittel der Gruppe iii) ein Farbmittel, ausgewählt aus der Gruppe, bestehend aus den Farbmitteln der Formeln (9), (10), (11), (12), (13), (14a), (14b) und/oder (15), ist 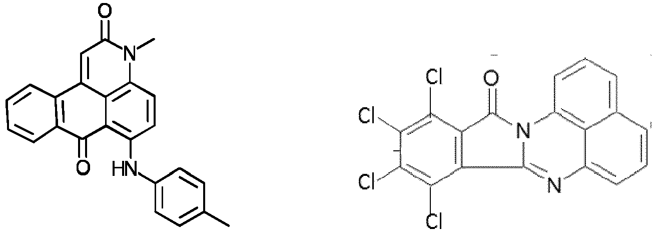 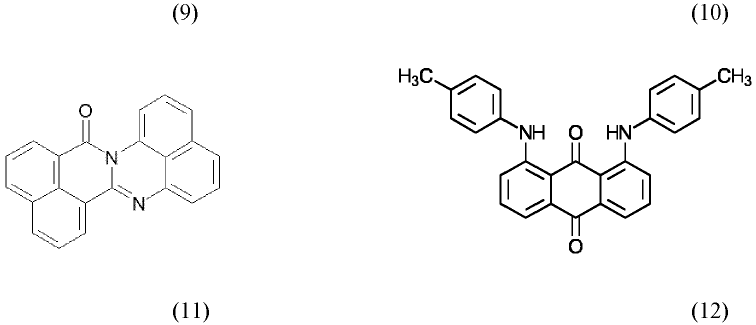 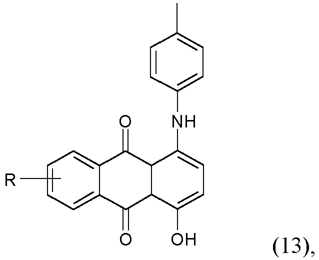
wobei R ausgewählt ist aus der Gruppe, die aus H und p-Methylphenylamin-Rest besteht, 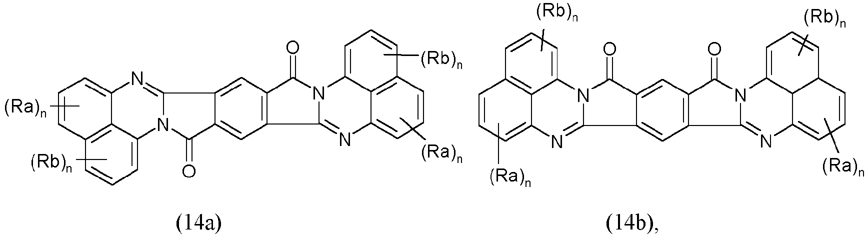
wobei
Ra und Rb unabhängig voneinander für einen linearen oder verzweigten Alkylrest oder Halogen stehen,
n unabhängig vom jeweiligen R für eine natürliche Zahl zwischen 0 und 3 steht, 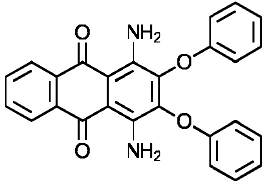 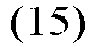 und
wobei die Farbmittel der Gruppe iv) ausgewählt sind aus der Gruppe, bestehend aus den gelben und orangen Farbmitteln der Formeln (16), (17), (18), (19) und/oder (20) 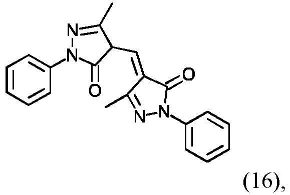 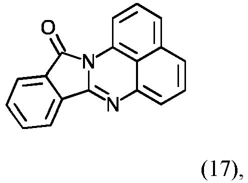 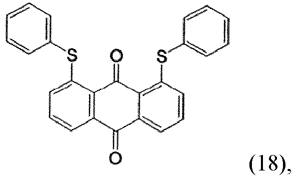 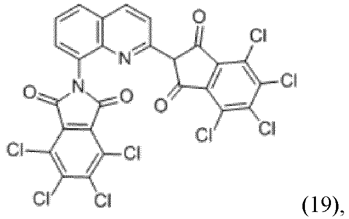 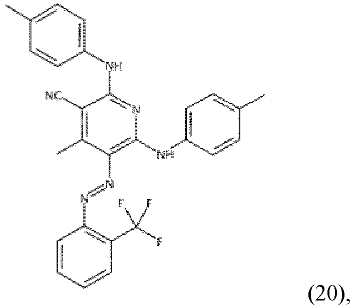 und wobei die Zusammensetzung neben den Farbmitteln der Gruppen ii) bis iv) keine weiteren Farbmittel enthält,
v) optional ein oder mehrere Additive, ausgewählt aus der Gruppe, bestehend aus Thermostabilisatoren, Entformungsmitteln, UV-Absorbern, Flammschutzmitteln, Antistatika und/oder Fließverbesserern,
vi) 0 bis weniger als 5,0 Gew.-% weitere thermoplastische Polymere und
vii) 0 bis weniger als 0,005 Gew.-% Ruß und
wobei die Dicke der Substratschicht 1,0 bis 6,0 mm beträgt.

12. Sensor-System nach einem der vorhergehenden Ansprüche,
wobei die Summe der Farbmittel ii) bis iv) in der thermoplastischen Zusammensetzung der Substratschicht mindestens 0,10 Gew.-% beträgt
und wobei die thermoplastische Zusammensetzung keine weiteren Thermoplaste enthält.

13. Sensor-System nach einem der vorhergehenden Ansprüche, wobei die Zusammensetzung der Substratschicht neben den Komponenten i-iii) und optional einer oder mehreren der Komponenten iv) bis vii) keine weiteren Komponenten enthält.

14. Fahrzeug, umfassend ein Sensor-System gemäß einem der vorhergehenden Ansprüche.

15. Verwendung eines Decklackes auf Polysiloxanbasis, enthaltend eine Kombination eines organomodifizierten Silans mit einem Kiesel-Sol, wobei der Decklack Siliciumdioxid-Partikel mit einem D₉₀, bestimmt mittels Rastertransmissionselektronenmikroskopie, von weniger als 0,50 µm enthält und keine weiteren Partikel mit einem D₉₀, bestimmt mittels Rastertransmissionselektronenmikroskopie, ≥ 0,50 µm enthält, als Beschichtungsschicht einer LiDAR-Sensor-Abdeckung, welche dafür vorgesehen ist, von dem Laserlicht des LiDAR-Sensors durchstrahlt zu werden, wobei die LiDAR-Sensor-Abdeckung eine Abdeckung gemäß einem der Ansprüche 1 bis 13 ist.

## Claims

1. Sensor system comprising
a) a LiDAR sensor which emits laser light having a wavelength in the range from 800 to 1600 nm, and
b) a cover which partially or completely surrounds the LiDAR sensor and which is intended to be transradiated by the laser light, comprising a multilayer body comprising in this order
i) a substrate layer comprising a thermoplastic composition based on aromatic polycarbonate having a melt volume rate MVR of 8 to 20 cm³/(10 min), determined according to ISO 1133-1:2012-03 (300°C, 1.2 kg),
wherein the composition has a light transmission in the range from 380 to 780 nm of less than 25.0%, determined at a layer thickness of 4 mm according to DIN ISO 13468-2:2006 (D65, 10°)
and wherein the substrate layer in its respective thickness has a transmission for IR radiation in the range from 800 nm to 1600 nm of at least 40%, determined according to DIN ISO 13468-2:2006, and
ii) optionally a primer layer based on polymethyl methacrylate and comprising at least one UV absorber,
iii) a polysiloxane-based topcoat layer comprising a combination of an organically modified silane with a silica sol, the topcoat layer comprising silicon dioxide particles having a D₉₀, determined by means of scanning transmission electron microscopy, of less than 0.50 µm and comprising no further particles having a D₉₀, determined by means of scanning transmission electron microscopy, ≥ 0.50 pm,
where the topcoat layer is on the side of the substrate layer which is opposite the side of the substrate layer on which the LiDAR sensor is disposed.

2. Sensor system according to Claim 1, wherein the topcoat layer comprises at least one UV absorber from the group of the benzophenones, resorcinols, 2-(2-hydroxyphenyl)benzotriazoles, hydroxyphenyl-s-triazines, 2-cyanoacrylates and/or oxalanilides.

3. Sensor system according to Claim 1 or 2, wherein the organically modified silane is at least one methyltrialkoxysilane, a dimethyldialkoxysilane or a mixture thereof.

4. Sensor system according to any of the preceding claims, wherein the multilayer body comprises one or more primer layers having a thickness of in each case 0.3 µm to 8 µm, comprising at least one UV absorber from the group of the benzophenones, the resorcinols, 2-(2-hydroxyphenyl)benzotriazoles, hydroxyphenyl-s-triazines, 2-cyanoacrylates, oxalanilides and/or sterically hindered amines (HALS).

5. Sensor system according to any of the preceding claims, wherein the cover comprises no layers other than the substrate layer i, one or more topcoat layers iii and optionally one or more primer layers ii.

6. Sensor system according to any of the preceding claims, wherein between the LiDAR sensor and the cover there is only air or an element that does not adversely affect the functional capacity of the LiDAR sensor.

7. Sensor system according to any of the preceding claims, wherein the topcoat layer comprises no particles other than the silicon dioxide particles.

8. Sensor system according to any of the preceding claims, wherein the D₉₀ of the silicon dioxide particles, determined by means of scanning transmission electron microscopy, is less than 50 nm.

9. Sensor system according to any of the preceding claims, wherein the multilayer body comprises, on both sides of the substrate layer, a topcoat layer iii) and in each case optionally a primer layer ii).

10. Sensor system according to any of the preceding claims, wherein the cover is a front panel, a rear panel, a bumper, a radiator grille, a vehicle roof, a vehicle roof module or a vehicle side component.

11. Sensor system according to any of the preceding claims, wherein the thermoplastic composition of the substrate layer comprises the following components:
i) at least 70% by weight of aromatic polycarbonate,
ii) at least one green and/or one blue colorant and
iii) at least one red and/or violet colorant,
iv) optionally further colorants,
wherein the sum of the colorants ii) to iv) is at least 0.05% by weight, and
the at least one colorant of group ii) is a colorant selected from the group consisting of the colorants of formulae (1), (2a-c), (3), (4a), (4b), (5), (6), (7) and/or (8), 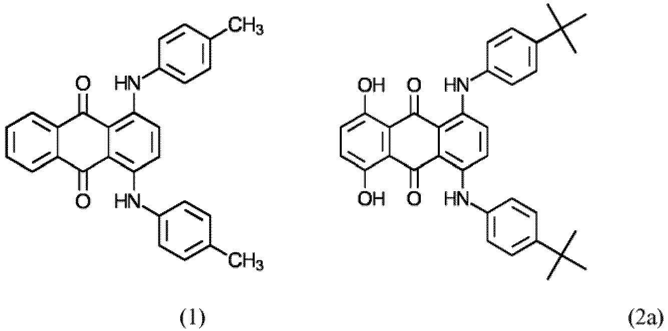 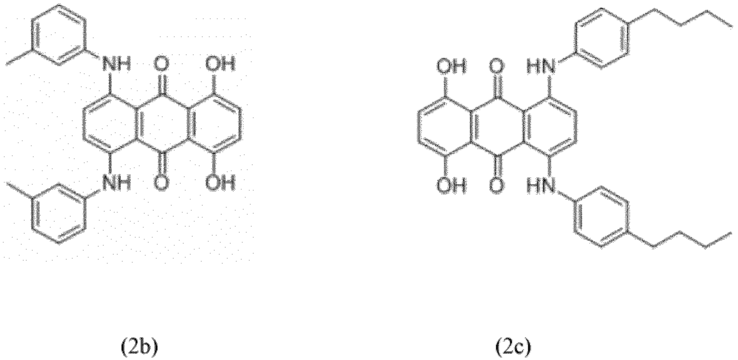 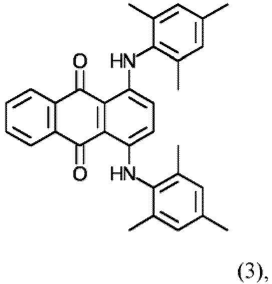 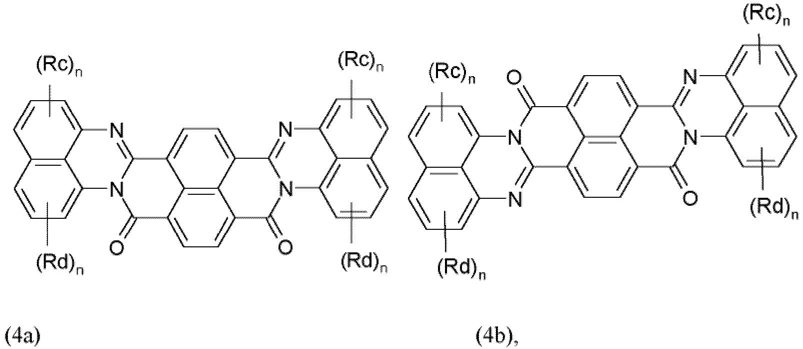
where
Rc and Rd independently of one another represent a linear or branched alkyl radical or halogen,
n independently of the respective R represents a natural number between 0 and 3, 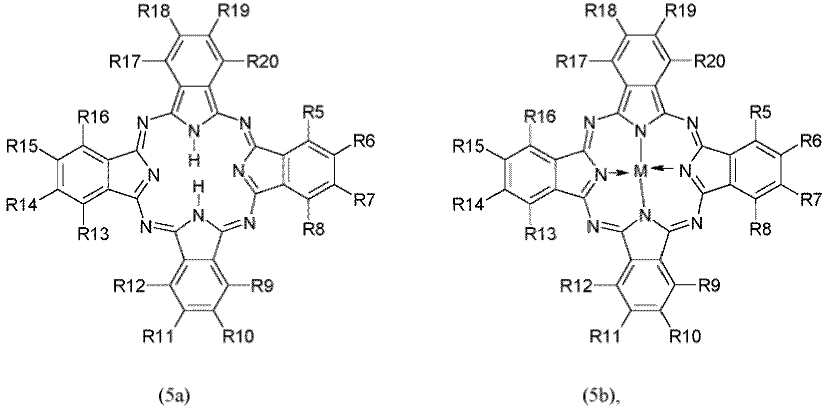
where the radicals R(5-20) independently of one another represent hydrogen, methyl, ethyl, propyl, isopropyl, butyl, isobutyl, tert-butyl, pentyl, neopentyl, hexyl, thexyl, fluoro, chloro, bromo, sulfone or CN and M is aluminium, nickel, cobalt, iron, zinc, copper or manganese, 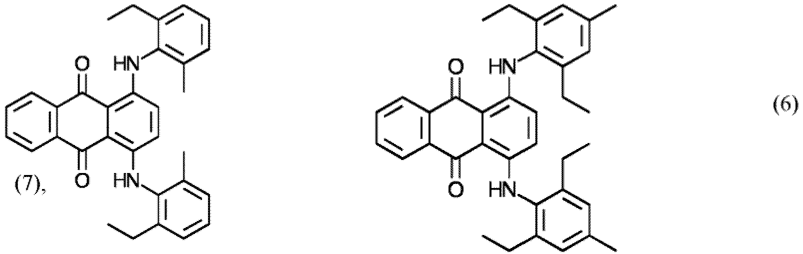 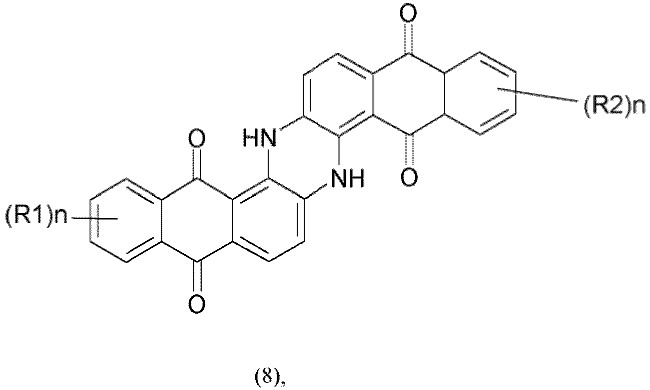
where
R1 and R2 independently of one another represent a linear or branched alkyl radical or halogen,
n is a natural number between 0 and 4,
and the at least one colorant of group iii) is a colorant selected from the group consisting of the colorants of formulae (9), (10), (11), (12), (13), (14a), (14b) and/or (15), 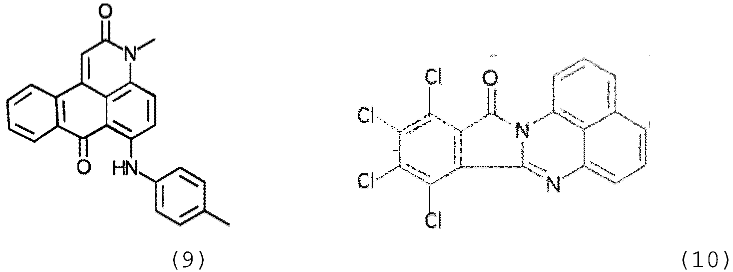 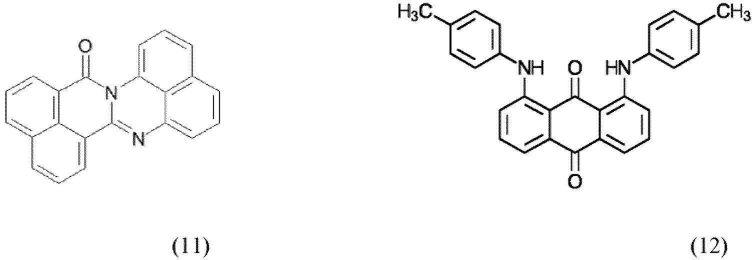 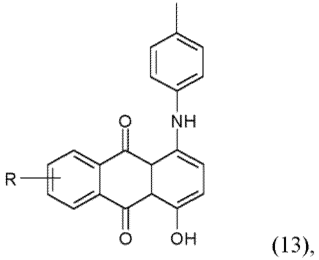
where R is selected from the group consisting of H and p-methylphenylamine radical, 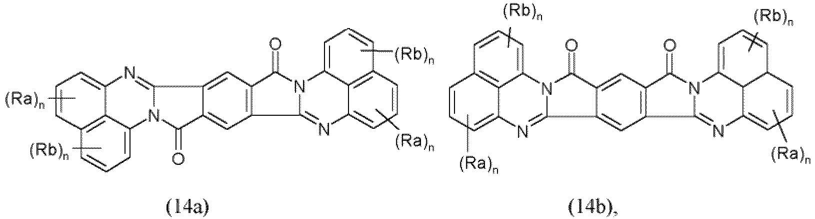
where
Ra and Rb independently of one another represent a linear or branched alkyl radical or halogen,
n independently of the respective R represents a natural number between 0 and 3, 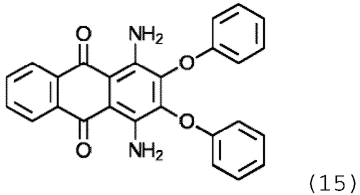 and
where the colorants of group iv) are selected from the group consisting of the yellow and orange colorants of formulae (16), (17), (18), (19) and/or (20) 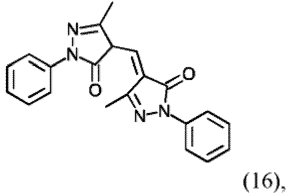 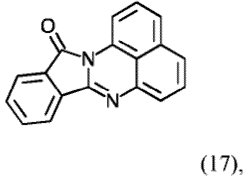 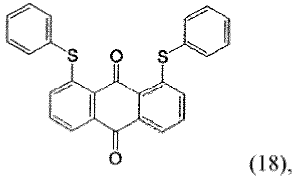 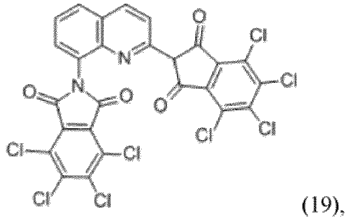 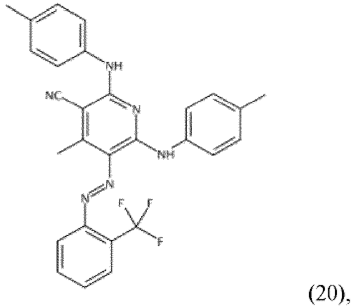 and wherein the composition comprises no colorants other than the colorants of groups ii) to iv),
v) optionally one or more additives selected from the group consisting of heat stabilizers, mould release agents, UV absorbers, flame retardants, antistats and/or flow improvers,
vi) 0% to less than 5.0% by weight of further thermoplastic polymers and
vii) 0% to less than 0.005% by weight of carbon black, and
where the thickness of the substrate layer is 1.0 to 6.0 mm.

12. Sensor system according to any of the preceding claims,
wherein the sum of the colorants ii) to iv) in the thermoplastic composition of the substrate layer is at least 0.10% by weight
and wherein the thermoplastic composition comprises no further thermoplastics.

13. Sensor system according to any of the preceding claims, wherein the composition of the substrate layer comprises no components other than components i-iii) and optionally one or more of components iv) to vii).

14. Vehicle comprising a sensor system according to any of the preceding claims.

15. Use of a polysiloxane-based topcoat comprising a combination of an organically modified silane with a silica sol, wherein the topcoat comprises silicon dioxide particles having a D₉₀, determined by means of scanning transmission electron microscopy, of less than 0,50 µm and comprises no further particles having a D₉₀, determined by scanning transmission electron microscopy, ≥ 0.50 µm, as a coating layer of a LiDAR sensor cover, which is intended to be transradiated by the laser light of the LiDAR sensor, wherein the LiDAR sensor cover is a cover according to any of Claims 1 to 13.

## Revendications

1. Système de capteur, comprenant
a) un capteur LiDAR qui émet de la lumière laser ayant une longueur d'onde dans la gamme de 800 à 1 600 nm, et
b) une couverture entourant en partie ou en totalité le capteur LiDAR, qui est prévue pour être traversée par la lumière laser, comprenant un corps multicouche comprenant, dans cet ordre
i) une couche de support, comprenant une composition thermoplastique à base de polycarbonate aromatique ayant un indice de fluidité en volume MVR de 8 à 20 cm³/(10 min), déterminé selon ISO 1133-1:2012-03 (300 °C, 1,2 kg),
la composition présentant une transmission de la lumière dans la gamme de 380 à 780 nm de moins de 25,0 %, déterminée pour une épaisseur de couche de 4 mm selon DIN ISO 13468-2:2006 (D65, 10°),
et la couche de support présentant en son épaisseur respective une transmission pour le rayonnement IR dans la gamme de 800 nm à 1 600 nm d'au moins 40 %, déterminée selon DIN ISO 13468-2:2006, et
ii) en option une couche de primaire à base de poly(méthacrylate de méthyle) et contenant au moins un absorbeur d'UV,
iii) une couche de vernis de finition à base de polysiloxane, contenant une association d'un silane à modification organique et d'un sol de silice, la couche de vernis de finition contenant des particules de dioxyde de silicium ayant une D₉₀, déterminée par microscopie électronique à transmission et balayage, de moins de 0,50 µm et ne contenant pas d'autres particules ayant une D₉₀, déterminée par microscopie électronique à transmission et balayage, ≥ 0,50 pm,
la couche de vernis de finition étant sur le côté de la couche de support qui est opposé au côté de la couche de support, sur lequel est disposé le capteur LiDAR.

2. Système de capteur selon la revendication 1, dans lequel la couche de vernis de finition contient au moins un absorbeur d'UV choisi dans le groupe des benzophénones, résorcinols, 2-(2-hydroxyphényl-)benzotriazoles, hydroxyphényl-s-triazines, 2-cyanoacrylates et/ou oxalanilides.

3. Système de capteur selon la revendication 1 ou 2, dans lequel le silane à modification organique est au moins un méthyltrialcoxysilane, un diméthyldialcoxysilane ou un mélange de ceux-ci.

4. Système de capteur selon l'une quelconque des revendications précédentes, dans lequel le corps multicouche comprend une ou plusieurs couches de primaire ayant une épaisseur chacune de 0,3 µm à 8 µm, contenant au moins un absorbeur d'UV choisi dans le groupe des benzophénones, des résorcinols, 2-(2-hydroxyphényl-)benzotriazoles, hydroxyphényl-s-triazines, 2 -cyanoacrylates, oxalanilides et/ou amines à encombrement stérique (HALS).

5. Système de capteur selon l'une quelconque des revendications précédentes, dans lequel outre la couche de support i, une ou plusieurs couches de vernis de finition iii et en option une ou plusieurs couches de primaire ii, la couverture ne comprend pas d'autres couches.

6. Système de capteur selon l'une quelconque des revendications précédentes, dans lequel entre le capteur LiDAR et la couverture est présent uniquement de l'air ou un élément n'affectant pas la fonctionnalité du capteur LiDAR.

7. Système de capteur selon l'une quelconque des revendications précédentes, dans lequel outre les particules de dioxyde de silicium la couche de vernis de finition ne contient pas d'autres particules.

8. Système de capteur selon l'une quelconque des revendications précédentes, dans lequel la D₉₀ des particules de dioxyde de silicium, déterminée par microscopie électronique à transmission et balayage, est inférieure à 50 nm.

9. Système de capteur selon l'une quelconque des revendications précédentes, dans lequel le corps multicouche comporte sur les deux côtés de la couche de support une couche de vernis de finition iii) et chaque fois en option une couche de primaire ii).

10. Système de capteur selon l'une quelconque des revendications précédentes, dans lequel la couverture est un panneau avant, un panneau arrière, un pare-chocs, une calandre, un toit de véhicule, un module de toit de véhicule ou un élément latéral de véhicule.

11. Système de capteur selon l'une quelconque des revendications précédentes, dans lequel la composition thermoplastique de la couche de support contient les composants suivants
i) au moins 70 % en poids de polycarbonate aromatique,
ii) au moins un agent colorant vert et/ou un agent colorant bleu et
iii) au moins un agent colorant rouge et/ou un agent colorant violet,
iv) en option d'autres agents colorants,
la somme des agents colorants ii) à iv) étant au moins de 0,05 % en poids, et
ledit au moins un agent colorant du groupe ii) étant un agent colorant choisi dans le groupe constitué par les colorants de formules (1), (2a-c), (3), (4a), (4b), (5), (6), (7) et/ou (8), 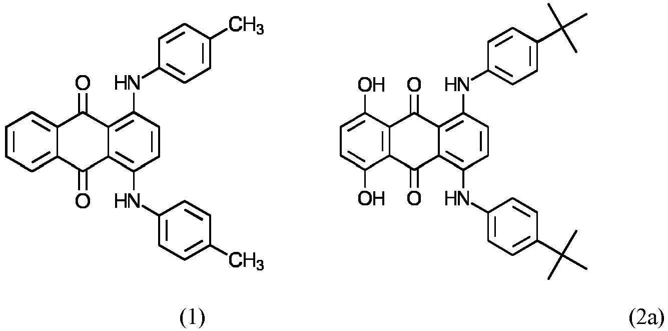 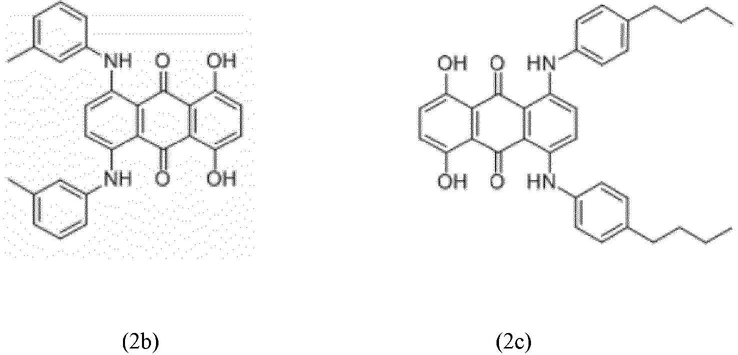 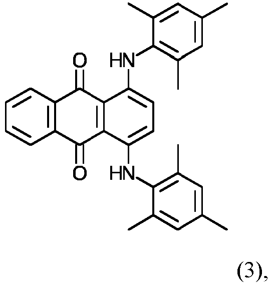 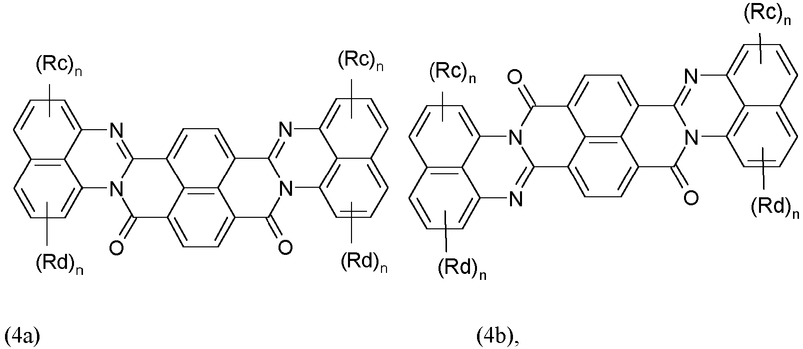 où
Rc et Rd représentent indépendamment l'un de l'autre un radical alkyle linéaire ou ramifié ou un atome d'halogène,
n représente indépendamment du R respectif un nombre naturel compris entre 0 et 3, 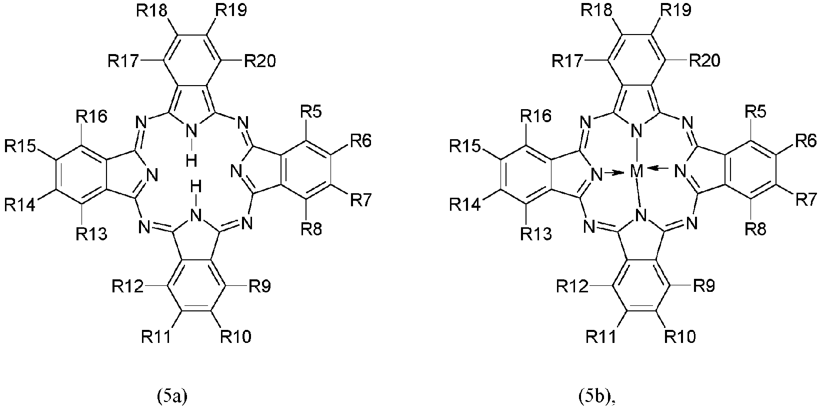
où les radicaux R(5-20) représentent indépendamment les uns des autres un atome d'hydrogène, un groupe méthyle, éthyle, propyle, isopropyle, butyle, isobutyle, tert-butyle, pentyle, néopentyle, hexyle, thexyle, un atome de fluor, chlore, brome, une sulfone, CN et M est l'aluminium, le nickel, le cobalt, le fer, le zinc, le cuivre ou le manganèse, 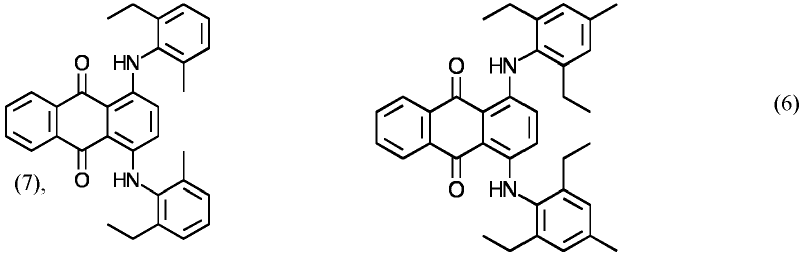 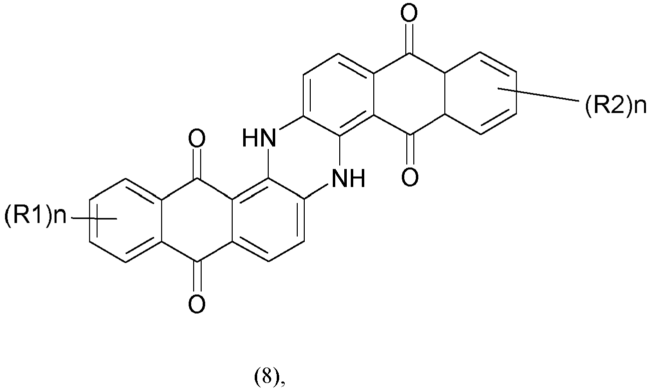 où
R1 et R2 représentent indépendamment l'un de l'autre un radical alkyle linéaire ou ramifié ou un atome d'halogène,
n représente un nombre naturel compris entre 0 et 4,
et ledit au moins un agent colorant du groupe iii) est un agent colorant choisi dans le groupe constitué par les colorants de formules (9), (10), (11), (12), (13), (14a), (14b) et/ou (15), 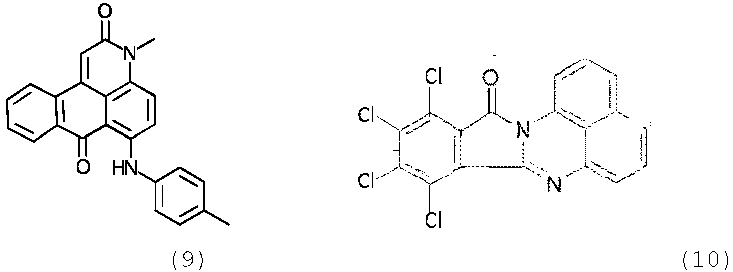 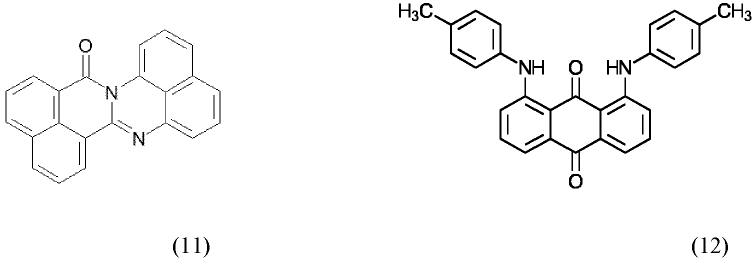 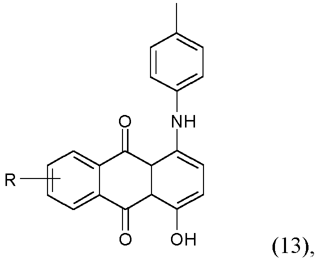
où R est choisi dans le groupe qui est constitué par H et le radical p-méthylphénylamino, 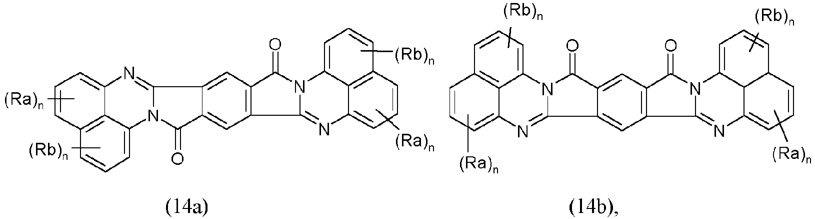 où
Ra et Rb représentent indépendamment l'un de l'autre un radical alkyle linéaire ou ramifié ou un atome d'halogène,
n représente indépendamment du R respectif un nombre naturel compris entre 0 et 3, 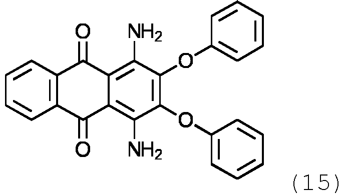 et
les agents colorants du groupe iv) sont choisis dans le groupe constitué par les agents colorants jaunes et orangés de formules (16), (17), (18), (19) et/ou (20) 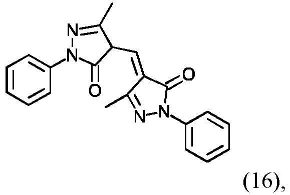 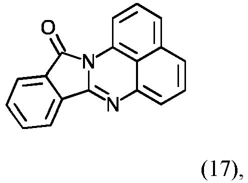 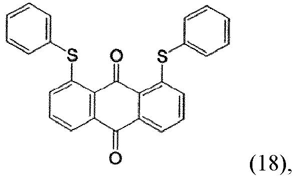 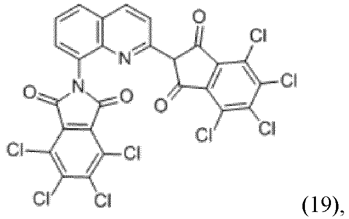 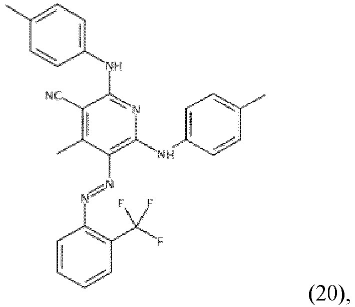
et outre les agents colorants des groupes ii) à iv) la composition ne contenant pas d'autres colorants,
v) en option un ou plusieurs additifs choisis dans le groupe constitué par les stabilisants thermiques, agents de démoulage, absorbeurs d'UV, agents ignifuges, antistatiques et/ou agents améliorant l'écoulement,
vi) 0 à moins de 5,0 % en poids d'autres polymères thermoplastiques et
vii) 0 à moins de 0,005 % en poids de noir de carbone et l'épaisseur de la couche de support étant de 1,0 à 6,0 mm.

12. Système de capteur selon l'une quelconque des revendications précédentes,
dans lequel la somme des agents colorants ii) à iv) dans la composition thermoplastique de la couche de support vaut au moins 0,10 % en poids
et la composition thermoplastique ne contenant d'autres matières thermoplastiques.

13. Système de capteur selon l'une quelconque des revendications précédentes, dans lequel outre les composants i-iii) et en option un ou plusieurs des composants iv) à vii) la composition de la couche de support ne contient pas d'autres composants.

14. Véhicule, comprenant un système de capteur selon l'une quelconque des revendications précédentes.

15. Utilisation d'un vernis de finition à base de polysiloxane, contenant une association d'un silane à modification organique et d'un sol de silice, le vernis de finition contenant des particules de dioxyde de silicium ayant une D₉₀, déterminée par microscopie électronique à transmission et balayage, de moins de 0,50 µm et ne contenant pas d'autres particules ayant une D₉₀, déterminée par microscopie électronique à transmission et balayage, ≥ 0,50 pm, en tant que couche de revêtement d'une couverture de capteur LiDAR, qui est prévue pour être traversée par la lumière laser du capteur LiDAR, la couverture de capteur LiDAR étant une couverture selon l'une quelconque des revendications 1 à 13.
